# EUROPÄISCHE PATENTSCHRIFT

(11) **EP 2 253 655 B1**
(45) Veröffentlichungstag und Bekanntmachung des Hinweises auf die Patenterteilung: **04.01.2012**
(21) Anmeldenummer: 10160656.4
(22) Anmeldetag: 22.04.2010
(51) Int. Cl.: C08G 77/50

(54) **Verzweigte Polydimethylsiloxan-Polyoxyalkylen Copolymere, ein Verfahren zu ihrer Herstellung und ihre Verwendung als Anti-Vernebelungsadditiv in UV-härtenden Silikonen**
Branched polydimethylsiloxane-polyoxyalkyl copolymers, a method for producing same and its use as anti-fumigation additive in UV-hardened silicons
Copolymères de polydiméthyle-siloxanes-polyoxyalkyles ramifiés, procédé destiné à leur fabrication et leur utilisation comme additifs anti-nébulisation dans des silicones durcissant aux UV

(30) Priorität: 20.05.2009 DE 102009003275
(43) Veröffentlichungstag der Anmeldung: 24.11.2010
(73) Patentinhaber: Evonik Goldschmidt GmbH, 45127 Essen (DE)
(72) Erfinder: Frey, Julia, 45131 Essen (DE); Hänsel, Rene, 46282 Dorsten (DE); Eissmann, Ingrid, 45884 Gelsenkirchen (DE)

(56) Entgegenhaltungen:
- US-A1- 2004 039 132
- US-A1- 2004 097 680

## Beschreibung

Die Erfindung betrifft verzweigte Polydimethylsiloxan-Polyoxyalkylen Copolymere, ein Verfahren zu ihrer Herstellung sowie ihre Verwendung als Anti-Vernebelungsadditiv in Silikontrennbeschichtungen.

### Stand der Technik

In der Silikonbeschichtungsindustrie werden Siloxane auf flächige Trägermaterialien wie Folie oder Papier mittels Walzen aufgetragen. Um die Produktivität zu steigern, besteht ein Trend darin, die Maschinengeschwindigkeit zu erhöhen. An den Silikonauftragswerken bilden sich bei Bahngeschwindigkeiten von über 300 m/min Sprühnebel. Zum einen führt die Vernebelung zu Verlust von Beschichtungsmasse und zum anderen wird die Raumluft durch den Sprühnebel belastet. Die Bildung des Sprühnebels kann durch den Zusatz von Anti-Vernebelungsadditiven reduziert werden.

Silikontrennbeschichtungen werden entweder thermisch oder durch Strahlung gehärtet. Bei der Strahlungshärtung unterscheidet man zwischen kationischer oder radikalischer Polymerisation. Kommerziell verfügbar sind insbesondere Anti-Vernebelungsadditive bzw. Silikonmischungen enthaltend Anti-Vernebelungsadditive für thermisch härtende Silikontrennbeschichtungen. Thermisch härtende Silikontrennbeschichtungen sind im Allgemeinen Mischungen enthaltend Wasserstoffsiloxane und Vinylsiloxane, die durch die Übergangsmetall-katalytisierte Hydrosilylierung vernetzt und damit gehärtet werden. Die für diese Systeme eingesetzten Anti-Vernebelungsadditive sind häufig dadurch gekennzeichnet, dass sie besonders hochmolekulare Siloxane enthalten, die durch Restfunktionalitäten zudem mit Einhärten können.

Die Herstellung und Verwendung von Antivernebelungsadditiven für thermisch härtende Silikontrennbeschichtungen sind z.B. in EP 1481018 und EP 1277786 sowie in US 6956096 beschrieben. Sie beinhalten verzweigte, durch Verknüpfung von Alkenylgruppen mit SiH-Gruppen erhaltene Siloxanpolymere.

In der Patentschrift US 6774201 werden sternförmig verzweigte Siloxanpolymere dargestellt, welche durch Hydrosilylierung erhalten werden.

Alle beschriebenen Antivernebelungsadditive haben gemein, dass sie für gezielt thermisch härtende Silikontrennbeschichtungen entwickelt wurden und den besonderen Anforderungen an UV-härtende Silikontrennbeschichtungen in Bezug auf bspw. Anti-Vernebelungswirkung, Trennwerte, Haftung und Vernetzung, Restklebekräfte sowie Alterung nicht gerecht werden.

Die Aufgabe der vorliegenden Erfindung bestand nun darin, ein Additiv für strahlenhärtende Trennbeschichtungsmassen bereitzustellen, welches bereits in geringen Mengen zugesetzt, dessen Tendenz zur Nebelbildung bei der Beschichtung von flächigen Substraten über Auftragewerke signifikant reduziert und zudem für strahlenhärtende Silikone besonders geeignet ist. Vorzugsweise wird die Bildung von Sprühnebeln um mindestens 15 %, bevorzugt um mindestens 30 % und besonders bevorzugt um mindestens 50% (im Vergleich zu Beschichtungen ohne erfindungsgemäßes Additiv) reduziert; das Additiv ist also antivernebelungsaktiv. Die Eigenschaften der strahlenhärtenden Silikontrennbeschichtungen hinsichtlich der Trennwerte (Finat test methods, FTM 10) sowie der Kurzzeit-Restklebekräfte (Finat test methods, FTM 11) sollen durch das Additiv möglichst gering oder gar nicht beeinflusst werden.

Überraschenderweise wurde nun gefunden, dass diese Aufgabe durch Silicon-Copolymere gemäß den Ansprüchen 1 bis 4 gelöst werden kann.

Gegenstand der vorliegenden Erfindung sind deshalb Copolymere gemäß Anspruch 1. Ebenfalls Gegenstand der vorliegenden Erfindung ist ein Verfahren zur Herstellung von Copolymeren gemäß Anspruch 5. Außerdem sind Gegenstände der vorliegenden Erfindung Zusammensetzungen gemäß Anspruch 13, die Verwendung der erfindungsgemäßen Copolymeren und Zusammensetzungen als Additiv in vernetzbaren Silikontrennbeschichtungen sowie diese Silikontrennbeschichtungen selbst. Weitere Gegenstände der Erfindung sind gekennzeichnet durch die nachfolgende Beschreibung und den Inhalt der Ansprüche/Unteransprüche.

Die erfindungsgemäßen Copolymere haben den Vorteil, dass bei ihrem Einsatz als Additiv in Silikontrennbeschichtungen die Bildung von Sprühnebeln messbar reduziert wird und gleichzeitig der Trennwert und die Kurzzeit-Restklebekräfte kaum beeinflusst werden. Die erfindungsgemäßen Copolymere bzw. die erfindungsgemäßen Zusammensetzungen haben insbesondere den Vorteil, dass sie in UV-härtenden Silikontrennbeschichtungen eingesetzt werden können, wo sie ihre Vorteile entfalten.

Die erfindungsgemäßen Copolymeren, ein Verfahren zu deren Herstellung, Zusammensetzungen, die diese Copolymeren enthalten sowie die Verwendung der erfindungsgemäßen Copolymeren werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Die verschiedenen Monomereinheiten der in den Formeln angegebenen Verbindungen (Siloxanketten bzw. Polyoxyalkylenketten bzw. durch Heteroatome unterbrochene Kohlenwasserstoffe) können untereinander blockweise aufgebaut sein oder einer statistischen Verteilung unterliegen. Die in den Formeln verwendeten Indices sind als statistische Mittelwerte zu betrachten. Unter dem mittleren Verzweigungsgrad k wird im Rahmen der vorliegenden Erfindung das Verhältnis der Anzahl von M- und MH-Einheiten zu T- und Q-Einheiten (M + MH) / (T+Q) verstanden. Die Bezeichnung der Einheiten entspricht der international anerkannten Nomenklatur, wie sie z. B. auch in Thieme Römpp Online, Georg Thieme Verlag, 2008 nachzulesen ist. Gemäß dieser Nomenklatur ist M = R₃SiO_{1/2}, D = R₂SiO_{2/2}, T = RSiO_{3/2} und Q = SiO_{4/2}, wobei R organische Reste sind. Mit MH wird eine Einheit bezeichnet, bei der einer der Reste R ein Wasserstoffatom ist. Mit DH wird eine Einheit bezeichnet, bei der einer der Reste R ein Wasserstoffatom ist. Die Bestimmung des Verzweigungsgrads erfolgt durch in Verhältnis setzen der Flächenintegrale der Peaks in einem 29Si-NMR-Spektrum, die den jeweiligen Einheiten zugeordnet sind.

Die erfindungsgemäßen Copolymere zeichnen sich dadurch aus, dass sie der Formel (1)

[A']_{a'}[B']_{b'}[C']_{c'}[D']_{d'}, mit (1)

genügen, mit
A' = Baustein der Formel (2) 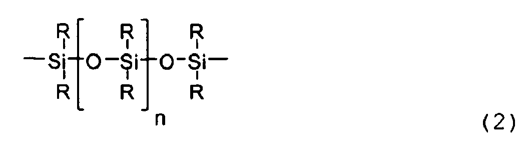 mit n = 2 bis 498, vorzugsweise 18 bis 148 und bevorzugt von 18 bis 98,
B' = Baustein der Formel (3) 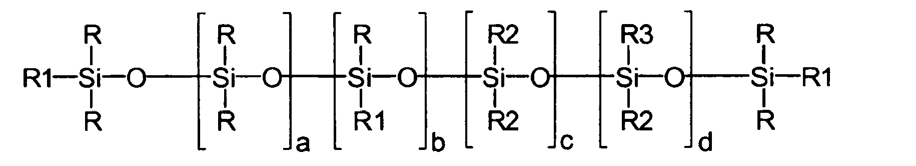 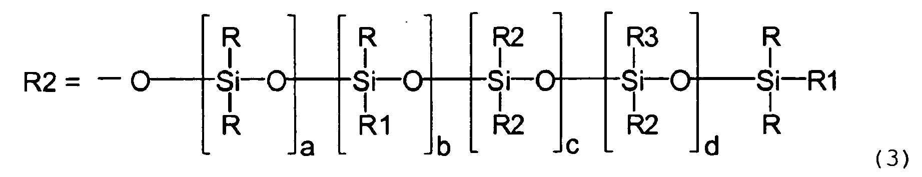
C' gleiche oder verschiedene Bausteine der Formeln (4) und/oder (5)

   -CH₂-CH₂-Q1-CH₂-CH₂- (4)

   -O-Q2-O- (5)
D' gleiche oder verschiedene Bausteine der Formeln (6) und/oder (7)

   -CH₂-CH₂-Q1-CH=CH₂ (6)

   -O-Q2-OH (7)

   worin
   - a: unabhängig voneinander 0 bis 500, vorzugsweise 1 bis 300, bevorzugt 10 bis 200 ist
   - b: unabhängig voneinander 0 bis 60, vorzugsweise 0 bis 30, bevorzugt > 0, insbesondere 1 bis 15 ist,
   - c: unabhängig voneinander 0 bis 10, vorzugsweise 0 oder > 0 bis 5,
   - d: unabhängig voneinander 0 bis 10, vorzugsweise 0 oder > 0 bis 5, mit der Maßgabe, dass c + d größer gleich 1 ist, wobei vorzugsweise entweder c größer-gleich 1 und d = 0 oder d größer-gleich 1 und c = 0 ist,
   - R: unabhängig von einander ein Rest aus der Gruppe linearer, cyclischer oder verzweigter, aliphatischer oder aromatischer, gesättigter oder ungesättigter Kohlenwasserstoffreste mit 1 bis zu 20 C-Atomen, vorzugsweise jedoch ein Methylrest ist,
   - R1: unabhängig voneinander eine Bindung zu einem Baustein oder R ist,
   - R3: unabhängig voneinander R1 oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist,
   - Q1: unabhängig voneinander eine Bindung oder ein organischer Rest und
   - Q2: ein organischer Rest ist, und
   - a', b', c' und d': Indizes sind, die die molaren Anteile der Bausteine A' bis D' in der Verbindung der Formel (1) angeben und a' von 20 bis kleiner 70 %, vorzugsweise 30 bis 60 % und bevorzugt 35 bis 50 %, b' größer 0 bis 20 %, vorzugsweise 0,1 bis 15 %, bevorzugt 0,1 bis 10%, c' = 30 bis kleiner 60 %, vorzugsweise 30 bis 50 % und d' größer- gleich 0, vorzugsweise > 0 bis 20 %, bevorzugt von 1 bis 15 % beträgt,
   mit der Maßgabe, dass mindestens ein R1 eine Bindung zu einem Baustein ist und dass die mittlere Anzahl der T- und Q-Einheiten pro Baustein jeweils nicht größer als 20, vorzugsweise nicht größer als 10, bevorzugt nicht größer als 5, die mittlere Anzahl der D-Einheiten pro Baustein nicht größer als 2000, vorzugsweise nicht größer als 1000 und bevorzugt nicht größer als 500 ist. Die Werte für a, b, c und d können, wenn in einem Baustein B' mehrere Reste R2 auch in diesen Resten R2 unterschiedlich sein.

Besonders bevorzugte erfindungsgemäße Copolymere sind solche der Formel (1a)

[A'_{a'}C'_{k'}][B'_{b'}C'_{k''}][D'_{d'}] (1a)

mit k' + k'' = c', und wobei A', B', C' und D' sowie a', b', c' und d' die für Formel (1) angegebene Bedeutung haben und das Verhältnis der Blöcke [A'_{a'}C'_{k'}] und [B'_{b'}C'_{k''}] sowie des Bausteins [D'_{d'}] zueinander durch X_{y}, Y_{y}, Z_{z} beschrieben ist, worin Xₓ = [A'_{a'}C'_{k'}], Y_{y} = [B'_{b'}C'_{k''}] und Z_{z} = [D'_{d'}] ist und die Indices x, y und z das Verhältnis von X zu Y zu Z beschreiben und x = 0,2 bis < 0,7, bevorzugt 0,3 bis 0,6, vorzugsweise 0,35 bis 0,5, y = größer 0 bis 0,2, bevorzugt 0,001 bis 0,15, vorzugsweise 0,001 bis 0,1 und Z = größer-gleich 0, vorzugsweise > 0 bis 0,2, bevorzugt von 0,01 bis 0,15 beträgt.

Die Blöcke [A'_{a'}C'_{k'}] und [B'_{b'}C'_{k''}] können blockweise oder statistisch verteilt im erfindungsgemäßen Copolymer vorliegen.

In den erfindungsgemäßen Copolymeren sind die einzelnen Bausteine untereinander durch SiC-Bindungen (Bindungen zwischen Bausteinen der Formeln (2) bzw. (3) mit (4) und (6)) und gegebenenfalls durch SiOC-Bindungen (Bindungen zwischen Bausteinen der Formeln (2) bzw. (3) mit (5) und (7)) miteinander verbunden.

Dem Fachmann ist geläufig, dass Q-Einheiten Siloxygruppen ohne organische Reste sind, T-Einheiten Siloxygruppen mit einem organischen Rest ausgewählt aus R1 und R3 und D Einheiten zwei organische Reste ausgewählt aus R1 und R3 enthalten.

Es kann vorteilhaft sein, wenn zumindest ein Baustein der Formel C' ein Baustein der Formel (4) ist, wobei Q1 eine Bindung oder ein organischer Rest ist, ausgewählt aus linearen, cyclischen oder verzweigten, aliphatischen oder aromatischen Kohlenwasserstoffresten mit 1 bis 30 Kohlenstoffatomen, Esterresten aus einer Dicarbonsäure mit 2 bis 20 Kohlenstoffatomen und einem Alkenol mit 3 bis 18 Kohlenstoffatomen, Esterresten aus einem Diol, welches lineare, cyclische oder verzweigte, aliphatische oder aromatische Kohlenwasserstoffreste mit 2 bis 30 Kohlenstoffatomen beinhaltet, und einer Carbonsäure, die 1 bis 21 Kohlenstoffatome, vorzugsweise 7 bis 9 Kohlenstoffatome trägt, Polyetherresten, die ggf. weitere Heteroatome wie N enthalten, wobei die Heteroatome bevorzugt am Ende der Polyetherkette vorhanden sind und die Heteroatome ggf. Reste aus der Gruppe linearer, cyclischer oder verzweigter, aliphatischer oder aromatischer Kohlenwasserstoffreste mit 1 bis zu 20 Kohlenstoffatomen aufweisen, Polyethergruppen und Amidgruppen tragende Resten der Formel (8a)

-(CH₂)ₑ-CON(R5)-CH(R4)CH₂-[O-CH(R4)CH₂]_{f}-O-[GO]_{g}-[CH₂CH(R4)O]ₕ-(R5)NOC-(CH₂)ᵢ- (8a)

mit
- R4: unabhängig voneinander H, -CH₃ oder -C₂H₅, vorzugsweise H oder -CH₃,
- R5: gleich R4
- e und i: unabhängig voneinander 0 bis 20, vorzugsweise 6 bis 8,
- f und h: unabhängig voneinander Werte > 1,
- g: 0 oder 1
- G: ein gegebenenfalls verzweigter Kohlenwasserstoffrest mit 2 bis 10 C-Atomen,
wobei das Gesamtmolgewicht des Restes der Formel (8a) von 100 bis 10.000 g/mol, vorzugsweise 100 bis 5.000 g/mol, insbesondere 400 bis 3.000 g/ mol beträgt, Polyethergruppen und Estergruppen enthaltenden sogenannten Polyether-Ester-Resten der Formel (8b)

- (CH₂)ₑ-CO[O-CH₂-CH(R4)]_{f}-O-[G-O]_{g}-[-CH₂-CH(R4)-O]ₕ-OC-(CH₂)ᵢ- (8b)

wobei Definitionen der Abkürzungen und Indices denen der Formel (8a) entsprechen, wobei die Polyoxyalkylenreste ein Molgewicht von 100 bis 10.000 g/mol, vorzugsweise 100 bis 5.000 g/mol, insbesondere 400 bis 3.000 g/ mol aufweisen.

Vorzugsweise ist im erfindungsgemäßen Copolymere zumindest ein Baustein der Formel C' ein Baustein der Formel (5), wobei Q2 ein organischer Rest ist, ausgewählt aus Kohlenwasserstoffresten mit 2 bis 20 Kohlenstoffatomen, die optional mit (vorzugsweise 1 bis 4) Hydroxylgruppen substituiert sein können oder ein Baustein der Formel (9) ist

-[O-CH₂-CH(R5)]₁-O-[G1-O]ₘ-[-CH₂-CH(R5)-O]ₒ- (9)

mit R5 unabhängig voneinander H, -CH₃ oder -C₂H₅, vorzugsweise H oder -CH₃, l und o unabhängig voneinander Werte größer oder gleich 0, m mindestens 1 und G1 einem Kohlenwasserstoffrest mit 2 bis 10 C-Atomen, wobei das Gesamtmolgewicht der Einheit der Formel (9) vorzugsweise von 100 bis 10.000 g/mol, bevorzugt von 100 bis 5000 g/mol und besonders bevorzugt von 400 bis 3000 g/mol beträgt.

Es kann vorteilhaft sein, wenn die erfindungsgemäßen Copolymeren als Bausteine der Formel C' ausschließlich Bausteine der Formel (4) aufweisen. Auf diese Weise wird nur ein Katalysator benötigt, da ausschließlich SiC-Verknüpfungen erzeugt werden. Da ausschließlich SiC-Verknüpfungen vorliegen, zeigen entsprechende Copolymere auch eine höhere Hydrolysestabilität.

Es kann vorteilhaft sein, wenn zumindest ein Baustein der Formel D' ein Baustein der Formel (6) ist, wobei Q1 eine Bindung oder ein organischer Rest ist, ausgewählt aus linearen, cyclischen oder verzweigten, aliphatischen oder aromatischen Kohlenwasserstoffresten mit 1 bis 30 Kohlenstoffatomen, Esterresten aus einer Dicarbonsäure mit 2 bis 20 Kohlenstoffatomen und einem Alkenol mit 3 bis 18 Kohlenstoffatomen, Esterresten aus einem Diol, welches lineare, cyclische oder verzweigte, aliphatische oder aromatische Kohlenwasserstoffreste mit 2 bis 30 Kohlenstoffatomen beinhaltet, und einer Carbonsäure, die 1 bis 21 Kohlenstoffatome, vorzugsweise 7 bis 9 Kohlenstoffatome trägt, Polyetherresten, die ggf. weitere Heteroatome wie N enthalten, wobei die Heteroatome bevorzugt am Ende der Polyetherkette vorhanden sind und die Heteroatome ggf. Reste aus der Gruppe linearer, cyclischer oder verzweigter, aliphatischer oder aromatischer Kohlenwasserstoffreste mit 1 bis zu 20 Kohlenstoffatomen aufweisen, Polyethergruppen und Amidgruppen tragende Resten der oben angegebenen Formel (8a) und Polyethergruppen und Estergruppen enthaltenden sogenannten Polyether-Ester-Resten der oben angegebenen Formel (8b).

Vorzugsweise ist in den erfindungsgemäßen Copolymeren zumindest ein Baustein der Formel D' ein Baustein der Formel (7), wobei Q2 ein organischer Rest, ausgewählt aus Kohlenwasserstoffresten mit 2 bis 20 Kohlenstoffatomen, die optional mit Hydroxylgruppen, vorzugsweise mit 1 bis 4 Hydroxylgruppen substituiert sein können, ist, oder ein Baustein der Formel (9a)

W-[O-CH₃-CH(R5)]ₗ-O-[G1-O]ₘ-[-CH₂-CH(R5)-O]ₒ-W (9a)

mit W = Wasserstoffatom oder eine Bindung, wobei ein W eine Bindung und ein W eine Wasserstoffatom darstellt, und die anderen Indizes und Abkürzungen denen in Formel (9) entsprechen.

Es kann vorteilhaft sein, wenn die erfindungsgemäßen Copolymeren als Bausteine der Formel D' ausschließlich Bausteine der Formel (6) aufweisen. Auf diese Weise wird nur ein Katalysator benötigt, da ausschließlich SiC-Verknüpfungen erzeugt werden. Da ausschließlich SiC-Verknüpfungen vorliegen, zeigen entsprechende Copolymere auch eine höhere Hydrolysestabilität.

Besonders bevorzugte erfindungsgemäße Copolymere sind solche, die wenn sie als Bausteine C' ausschließlich solche der Formel (4) aufweisen, als Bausteine der Formel D' auch ausschließlich solche der Formel (6) aufweisen.

Die erfindungsgemäßen Copolymere können z. B. mit dem nachfolgend beschriebenen erfindungsgemäßen Verfahren zur Herstellung von Copolymeren erhalten werden, welches sich dadurch auszeichnet, dass Komponenten A, B und C umgesetzt werden, wobei als Komponente A Verbindungen der Formel (10) eingesetzt werden, 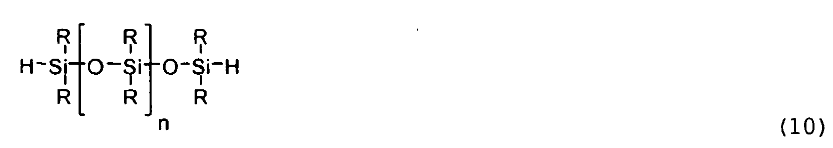 und n und R die in Anspruch 1 angegebene Bedeutung haben,
wobei als Komponente B Verbindungen der Formel (11) eingesetzt werden, 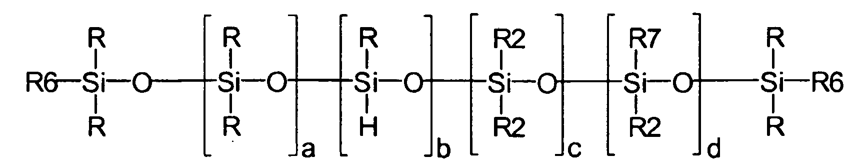 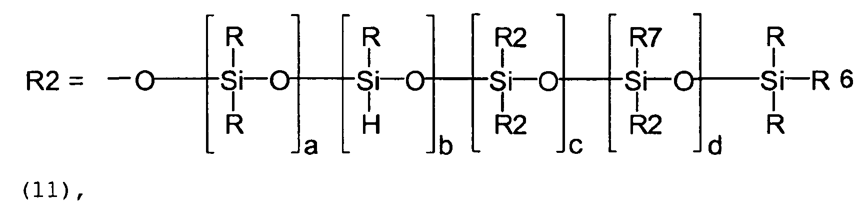 wobei
- R6: unabhängig voneinander Wasserstoff oder R ist,
- R7: unabhängig voneinander Wasserstoff, R oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist,
R, a, b, c und d die in Anspruch 1 angegebene Bedeutung haben, mit der Maßgabe, dass wenn b = 0 zumindest ein Rest R6 oder R7 = H ist und dass die mittlere Anzahl der T- und Q-Einheiten pro Molekül jeweils nicht größer als 20, vorzugsweise nicht größer als 10, bevorzugt nicht größer als 5, die mittlere Anzahl der D-Einheiten pro Molekül nicht größer als 2000, vorzugsweise nicht größer als 1000 und bevorzugt nicht größer als 500 und die mittlere Anzahl der D^{H}-Einheiten pro Molekül nicht größer als 100, vorzugsweise nicht größer als 60 ist, und b bevorzugt größer-gleich, insbesondere gleich 0 ist,
und wobei als Komponente C Verbindungen der Formel (12) und/oder (13) eingesetzt werden,

CH₂=CH-Q1-CH=CH₂ (12)

H-O-Q2-O-H (13)

wobei Q1 und Q2 die in Anspruch 1 genannten Bedeutungen haben. Bevorzugt eingesetzte Komponenten der Formel (13) sind solche der oben genannten Formel (9a), mit der Maßgabe, dass beide Reste W ein Wasserstoffatom sind.

Die verzweigten modifizierten Wasserstoffsiloxane (Komponente B) können solche sein, bei denen die SiH-Funktionen rein endständig, rein seitenständig oder gemischt end- und seitenständig im Siloxan angeordnet sind.

Dem Fachmann ist geläufig, dass Q-Einheiten Siloxygruppen ohne organische Reste sind, T-Einheiten Siloxygruppen einen organischen Rest und D-Einheiten zwei organische Reste enthalten.

Als Verbindungen der Komponente B können alle Verbindungen eingesetzt werden, die der Formel für die Komponente B genügen. Vorzugsweise werden z. B. solche Verbindungen als Komponenten B eingesetzt, wie sie z. B. in DE 102007055485 und DE 102008041601 beschrieben werden. Auch auf die dort beschriebene Herstellung der verzweigten Wasserstoffsiloxane wird ausdrücklich verwiesen.

In dem erfindungsgemäßen Verfahren wird die Komponente A vorzugsweise in molaren Anteilen von 20 bis kleiner 70 %, bevorzugt von 30 bis 60 %, besonders bevorzugt 35 bis 50 % die Komponente B vorzugsweise in molaren Anteilen von größer 0 bis 20 %, bevorzugt von 0,1 bis 10 %, vorzugsweise von 0,1 bis 5% und die Komponente C vorzugsweise in molaren Anteilen von 30 bis 80 %, vorzugsweise von 30 bis 70 %, vorzugsweise 40 bis 70 % eingesetzt, wobei sich die molaren Anteile der Komponenten A, B und C zu 100 % ergänzen.

In einer bevorzugten Ausführungsvariante des erfindungsgemäßen Verfahrens werden ausschließlich Verbindungen der Formel (12) als Komponente C eingesetzt.

In einer weiteren bevorzugten Ausführungsvariante werden als Komponente C Verbindungen der Formel (12) und Verbindungen der Formel (13) eingesetzt, wobei das molare Verhältnis der Verbindungen der Formel (12) zu Verbindungen der Formel (13) vorzugsweise von 1 zu 0,5 bis 1 zu 3, bevorzugt von 1 zu 1 bis 1 zu 3, besonders bevorzugt 1 zu 1 bis 1 zu 2 beträgt.

Als Verbindungen der Formel (12) können alle ungesättigten organischen Verbindungen mit mindestens zwei terminalen C-C-Doppelbindungen eingesetzt werden. Diese Verbindungen können z. B. Heteroatome wie N, S, O, P, aromatische Bestandteile, Carbonsäureestergruppen oder Carbonsäureamidgruppen enthalten. Bevorzugte Verbindungen der Formel (12) können insbesondere sein:
1) lineare, cyclische oder verzweigte, aliphatische oder aromatische Kohlenwasserstoffe mit 4-30 Kohlenstoffatomen, die mindestens zwei terminale C-C-Doppelbindungen aufweisen,
2) Ester aus einer Dicarbonsäure mit 2-20 Kohlenstoffatomen und einem Alkenol mit 5 bis 20 Kohlenstoffatomen, die mindestens zwei terminale C-C-Doppelbindungen aufweisen,
3) Diester aus einem Diol welches lineare, cyclische oder verzweigte, aliphatische oder aromatische Kohlenwasserstoffe mit 2-30 Kohlenstoffatomen beinhaltet und zwei Carbonsäuren, die gleich oder unterschiedlich sein können, wobei die Carbonsäuren eine endständige C-C-Doppelbindung aufweisen muss und 3 bis 23 Kohlenstoffatome, vorzugsweise 9 bis 11 Kohlenstoffatome aufweist,
4) Polyether, die weitere Heteroatome wie N enthalten, wobei die Heteroatome bevorzugt am Ende der Polyetherkette angeordnet sind und das Heteroatom Reste aus der Gruppe linearer, cyclischer oder verzweigter, aliphatischer oder aromatischer Kohlenwasserstoffreste mit 1 bis zu 20 Kohlenstoffatomen, und die mindestens zwei terminale C-C-Doppelbindungen aufweisen,
5) Polyethergruppen und Amidgruppen tragende Verbindungen sogenannte Polyetheramide der Formel (14a)

   CH₂=CH-(CH₂)ₑ-CON(R5)-CH(R4)CH₂-[O-CH(R4)CH₂]_{f}-O-[GO]_{g}-[CH₂CH(R4)O]ₕ-(R5)NOC-(CH₂)ᵢ-CH=CH₂ (14a)

   wobei die Indizes und Abkürzungen die oben für Formel (8a) angegebene Bedeutung haben und auf Polyethern basieren, die vorzugsweise ein Molgewicht von 100 bis 10.000 g/mol, vorzugsweise 100 bis 5.000 g/mol, insbesondere 400 bis 3.000 g/mol aufweisen; oder
6) Polyethergruppen und Estergruppen enthaltende sogenannte Polyether-Ester der Formel (14b),

   CH₂=CH-(CH₂)ₑ-CO[O-CH₂-CH(R4)]_{f}-O-[G-O]_{g}-[-CH₂-CH(R4)-O]ₕ-OC-(CH₂)ᵢ-CH=CH₂ (14b)

   wobei die oben für (14a) aufgeführten Definitionen gelten, wobei sie auf Polyether-Verbindungen basieren, die vorzugsweise ein Molgewicht von 100 bis 5000 g/mol aufweisen und deren endständigen primären oder sekundären OH-Gruppen mit Carbonsäuren verestert wurden, die eine C-C-Doppelbindung tragen, wobei die Veresterung chemisch oder enzymatisch erfolgen kann.

Verbindungen der Formel (14a) sind z. B. durch Umsetzen der endständigen primären oder sekundären Amingruppen von Aminen, die mindestens zwei Amin-Gruppen aufweisen, zum Carbonsäureamid erhältlich, wobei Carbonsäuren eingesetzt werden müssen, die eine endständige C-C-Doppelbindung aufweisen.

Die eingesetzten Polyether-Ester der Formel (14b) können vorzugsweise wie in DE-10 2006 005 100.9 beschrieben, durch Kondensation der entsprechenden Alkohole und Säuren unter Verwendung mindestens eines Enzyms als Katalysator hergestellt werden. Statt der Säuren können auch die entsprechenden Ester der Carbonsäuren mit leichtflüchtigen Alkoholen zu einer Umesterung eingesetzt werden, beispielsweise eignen sich Methyl-, Ethyl- oder Vinylester.

Bei den als Katalysatoren für die Veresterung/Umesterung verwendbaren Enzymen handelt es sich vorzugsweise um solche aus der Gruppe der hydrolytischen Enzyme, z. B. Lipasen, Esterasen oder Proteasen, wie beispielsweise Cholesterol Esterase, Esterase aus Schweineleber oder Lipasen aus Candida rugosa, Pseudomonas sp., Thermomyces langosiosus, Schweinepankreas, Mucor miehei, Alcaligines sp., vorzugsweise Lipasen, besonders bevorzugt Lipase B aus Candida antarctica. Bevorzugt wird als Katalysator das Enzym Lipase B aus Candida antarctica eingesetzt, welches unter der Produktbezeichnung Novozym® 435 von Novozymes Deutschland GmbH zu beziehen ist.

Über Carbonsäureestergruppen verknüpfte Siliconpolyether-Copolymere sind an sich bekannte Verbindungen, die nach verschiedenen Verfahren gewonnen werden können.

So beschreiben die Patentanmeldungen JP-A-08-157601 und US-A-2003-0096919 zwar den Einsatz terminal ungesättigter Ester, machen jedoch keine Angaben über die Herstellung und ggf. Aufreinigung dieser Verbindungen. Unter Berücksichtigung, dass die Platinmetall-katalysierte Hydrosilylierung eine gegenüber Katalysatorgiften sehr empfindliche Reaktion ist, sind teilweise umfangreiche Reinigungsschritte nötig, um brauchbare Ester zu erhalten, die problemlos weiter mit Siloxanen umgesetzt werden können.

Als Verbindungen der Formel (13) können alle Verbindungen mit mindestens zwei Hydroxyl-Gruppen, wie z. B. Diole, Triole oder Polyole eingesetzt werden. Vorzugsweise werden als Verbindung der Formel (13) die nachfolgend aufgeführten Verbindungen eingesetzt:
7) endständige Diole mit 2 bis 20 Kohlenstoffatomen,
8) Triole mit 2 bis 20 Kohlenstoffatomen,
9) Polyole mit 4 bis 6 Hydroxylgruppen und 4 bis 8, vorzugsweise 4 bis 6 Kohlenstoffatomen,
10) Polyoxyalkylenverbindungen, die mit Formel (15) beschrieben werden können

   H-[O-CH₂-CH(R5)]ₗ-O-[G1-O]ₘ-[-CH₂-CH(R5)-O]ₙ-H (15)

   mit
   - R5: unabhängig voneinander: H, -CH₃ oder -C₂H₅, vorzugsweise H oder -CH₃,
   - n und 1: unabhängig voneinander Werte größer-gleich 0, bevorzugt größer gleich 1,
   - m: mindestens 1
   - G1: ein Kohlenwasserstoffrest mit 2 bis 10 C-Atomen,
   wobei das Gesamtmolgewicht der Verbindung der Formel (15) von 100 bis 10.000 g/mol, vorzugsweise 100 bis 5.000 g/mol, insbesondere 400 bis 3.000 g/ mol beträgt.

Das erfindungsgemäße Verfahren wird vorzugsweise so durchgeführt, dass ein vollständiger Umsatz der eingesetzten Si-H-Gruppen erreicht wird. Es kann aber auch vorteilhaft sein, wenn das Verfahren so durchgeführt wird, dass kein vollständiger aber zumindest ein 95-%iger, vorzugsweise ein 96-bis 99-%iger Umsatz der SiH-Gruppen erzielt wird.

Die erfindungsgemäße Umsetzung kann wahlweise mit oder ohne den Einsatz eines geeigneten Lösungs- oder Suspensionsmittels erfolgen. Werden hochmolekulare und damit einhergehend hochviskose Copolymere angestrebt, so kann es zur Verbesserung der Handhabbarkeit vorteilhaft sein, die Umsetzung in einem geeigneten Lösungs- oder Suspensionsmittel durchzuführen.

Geeignete sind z. B. Alkane, Cycloalkane, Alkylaromaten u.ä., wobei insbesondere hochsiedende Lösungsmittel mit Siedepunkten > 90°C, bevorzugt > 90°C bis < 120 °C bevorzugt sind.

In dem erfindungsgemäßen Verfahren erfolgt die Umsetzung der Komponenten A und B mit den Verbindungen der Formel (10) vorzugsweise durch eine Hydrosilylierungsreaktion. Die Hydrosilylierung kann wie im Stand der Technik beschrieben mit Edelmetallkatalysatoren, bevorzugt Platinkatalysatoren, vorzugsweise mit den aus EP-A-1 520 870 bekannten Ethylenaktivierten Karstedt-Katalysatoren durchgeführt werden. Die Edelmetallkatalysatoren werden vorzugsweise in Mengen (des Edelmetalls) von ca. 1.10⁻⁴ bis ca. 1.10⁻², vorzugsweise 3.10⁻⁴ bis 5.10⁻³ Gew.-%, bezogen auf die Gesamtmenge eingesetzt. Die Hydrosilylierung kann in Gegenwart eines Lösungsmittels oder lösungsmittelfrei durchgeführt werden.

Ein geeignetes Hydrosilylierungsverfahren wird im Folgenden beispielhaft beschrieben. Die Reaktionspartner, also Verbindungen der Formel (12) werden, optional unter Einbeziehung eines Lösungs- oder Suspensionsmittels, unter inniger Durchmischung bei vorzugsweise erhöhter Temperatur vorgelegt. Anschließend wird eine ausreichende Menge eines für diese Reaktion praxisüblichen Edelmetallkatalysators, vorzugsweise ausgewählt aus der Gruppe der Platin-Katalysatoren zugegeben und die Komponente A oder die Komponenten A und B zudosiert.

Werden bei der Hydrosilylierung endständige Wasserstoffsiloxane A und Polyether-Ester der Formel (12) zur Reaktion gebracht, erhält man lineare SiC-verknüpfte Präpolymere. Werden bei der Hydrosilylierung endständige Wasserstoffsiloxane A, verzweigte endständige Wasserstoffsiloxane oder verzweigte seitenständige Wasserstoffsiloxane oder verzweigte end- und seitenständige Wasserstoffsiloxane B und Polyether-Ester der Formel (12) eingesetzt, erhält man verzweigte SiC-verknüpfte Präpolymere.

Bei der Umsetzung ist der molare Anteil der SiH Gruppen der Komponente B an der Gesamtstoffmenge aller eingesetzten SiH-Gruppen vorzugsweise kleiner 50%, bevorzugt kleiner 45%, bevorzugt kleiner 35% und insbesondere kleiner 30 %, da sonst die Gefahr des Vergelens besteht.

Als Edelmetallkatalysatoren können bei der Hydrosilylierung vorzugsweise Karstedt-Katalysatoren eingesetzt werden. Die Edelmetallkatalysatoren werden vorzugsweise in Mengen von ca. 1·10⁻⁴ bis ca. 1·10⁻² Gew.-%, vorzugsweise 3·10⁻⁴ bis 5·10⁻³ Gew.-%, bezogen auf die Gesamtmenge eingesetzt.

Die Reaktionstemperatur bei der Hydrosilylierung beträgt vorzugsweise von 60 °C bis 140 °C, bevorzugt von 70 °C bis 120 °C.

Werden im erfindungsgemäßen Verfahren nur Komponenten eingesetzt, die per Hydrosilylierung reagieren, kann es vorteilhaft sein, die Hydrosilylierung in zwei Schritten durchzuführen. So kann z. B. zunächst eine Hydrosilylierung mit Komponente A und Verbindungen der Formel (12) durchgeführt werden, wobei die Verbindungen der Formel (12) entweder vorzugsweise im molaren Unterschuss oder vorzugsweise im molaren Überschuss eingesetzt werden, und in einem zweiten Hydrosilylierungsschritt die Komponente B sowie ggf. weitere Verbindungen der Formel (12) zugegeben und zur Reaktion gebracht werden, und zwar derart, dass in der Summe ein geringer Überschuss der Verbindungen der Formel (12) vorhanden ist.

Dafür werden bei der erfindungsgemäßen Umsetzung im ersten Schritt die SiH-Funktionen der Komponente A oder der Komponenten A und B mit den C=C-Doppelbindungen der Komponente C vorzugsweise mit einem Molverhältnis der funktionellen Gruppen von SiH zu C=C von 1 : 0,4 bis 1 : 0,95 vorzugsweise 1 : 0,5 bis 1 : 0,9, vorzugsweise 1 : 0,5 bis 1 : 0,8 eingesetzt.

In einer weiteren bevorzugten Ausführungsform der erfindungsgemäßen Umsetzung werden im ersten Schritt die SiH-Funktionen der Komponente A oder der Komponenten A und B mit den C=C-Doppelbindungen der Komponente C mit einem Molverhältnis der funktionellen Gruppen von SiH zu C=C von vorzugsweise 1 : 1,01 bis 1 : 2, bevorzugt 1 : 1,05 bis 1 : 1,5 und besonders bevorzugt 1 : 1,1 bis 1 : 1,3 eingesetzt.

In einer weiteren Hydrosilylierungsreaktion werden zu dem Präpolymer in einem geeigneten Lösungs- oder Suspensionsmittel bei erhöhter Temperatur unter inniger Durchmischung die Komponenten A oder B, bevorzugt Komponente B zugegeben, wobei das Molverhältnis der funktionellen Gruppen SiH der Komponente B zu den funktionellen Gruppen C=C des Präpolymers vorzugsweise von 1 : 1,05 bis 1 : 30, bevorzugt von 1 : 2 bis 1 : 15 und besonders bevorzugt von 1 : 2 bis 1 : 10 beträgt.

Werden die Hydrosilylierungsreaktionen nacheinander durchgeführt, kann es vorteilhaft sein, zwischen den Reaktionsschritten einen Aufarbeitungsschritt durchzuführen.

In dem erfindungsgemäßen Verfahren erfolgt die Umsetzung der Komponenten A und B mit den Verbindungen der Formel (12) und (13) vorzugsweise so, dass eine Hydrosilylierung und eine dehydrogenative Kondensation durchgeführt wird. Die dehydrogenative Kondensation kann wie im Stand der Technik beschrieben durchgeführt werden. Die beiden Reaktionen können gleichzeitig oder nacheinander, vorzugsweise nacheinander durchgeführt werden. Werden die Reaktionen nacheinander durchgeführt kann zunächst die Hydrosilylierung und anschließend die dehydrogenative Kondensation durchgeführt werden oder umgekehrt. Vorzugsweise wird zunächst eine Hydrosilylierung und anschließend eine dehydrogenative Kondensation durchgeführt. Bevorzugt wird das erfindungsgemäße Verfahren so durchgeführt, dass bei der Umsetzung eine Hydrosilylierung unter Verwendung eines Edelmetallkatalysators, vorzugsweise ausgewählt aus der Gruppe der Platinkatalysatoren und eine dehydrogenative Kupplung unter Verwendung von mindestens einem Katalysator, der vorzugsweise zumindest eines der Elemente B, Al, Ga enthält. Werden die Reaktionen nacheinander durchgeführt kann es vorteilhaft sein, zwischen den Reaktionsschritten einen Aufarbeitungsschritt durchzuführen.

Eine Ausführungsform der dehydrogenativen Kondensation wird nachfolgend beispielhaft beschrieben. Bei der dehydrogenativen Kondensation werden vorhandene SiH-Funktionen, die z. B. im durch Hydrosilyierung aus den Komponenten A, B oder A und B mit Verbindungen der Formel (12) entstandenen Präpolymeren vorhanden sind, sowie eventuell SiH-Gruppen von zusätzlich zugegebenen Komponenten A und/oder B, insbesondere B, mit der Hydroxylgruppen der Verbindungen der Formel (13) zur Reaktion gebracht.

Alle Reaktionspartner können prinzipiell unter inniger Durchmischung bei erhöhter Temperatur gemeinsam vorgelegt und durch Zugabe einer ausreichenden Menge eines für diese Reaktion praxisüblichen Katalysators zur Umsetzung gebracht werden. In einer weiteren bevorzugten Ausführungsform wird der praxisübliche Katalysator bei Raumtemperatur zugegeben und unter inniger Durchmischung langsam erwärmt.

Geeignete Katalysatoren für die dehydrogenative Kondensation sind beispielsweise NaOH, KOH, Tetramethylammoniumhydroxid, Alkalifluoride, Erdalkalifluoride, Borkatalysatoren, wie z. B. Tris(pentafluorphenyl)boran, Carbonsäuren, Triflate, wie z. B. Scandiumtriflat, und/oder Carboxylate oder deren Mischungen. Bevorzugte Katalysatoren sind solche, wie sie z. B. in DE 103 12 636 und US 6,482,912 beschrieben werden.

Vorzugsweise werden als Katalysatoren Elementverbindungen der III. Hauptgruppe und/oder Elementverbindungen der 3. Nebengruppe verwendet. Bevorzugte Katalysatoren sind bor- und/oder aluminiumhaltige Katalysator und/oder scandium-, yttrium-, lanthan- und/oder lanthanoid-haltige Katalysatoren.

Als Borkatalysatoren werden vorzugsweise (C₅F₄)(C₆F₅)₂B; (C₅F₄)₃B; (C₆F₅)BF₂; BF(C₆F₅)₂; B(C₆F₅)₃; BCl₂(C₆F₅); BCl(C₆F₅)₂; B(C₆H₅)(C₆F₅)₂; B(Ph)₂(C₆F₅); [C₆H₄(mCF₃)]₃B; [C₆H₄(POCF₃)]₃B; (C₆F₅)B(OH)₂; (C₆F₅)₂BOH; (C₆F₅)₂BH; (C₆F₅)BH₂; (C₇H₁₁)B(C₆F₅)₂; (C₈H₁₄B)(C₆F₅) ; (C₆F₅)₂B(OC₂H₅)_{;} (C₆F₅)₂B-CH₂CH₂Si(CH₃)₃; 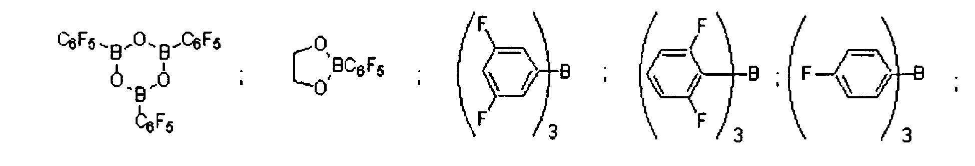 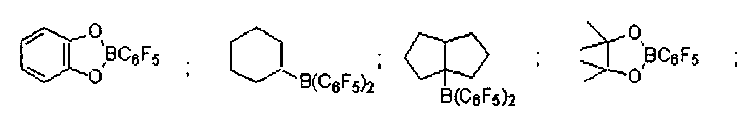 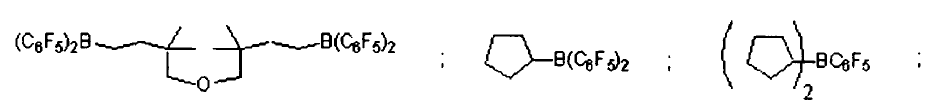 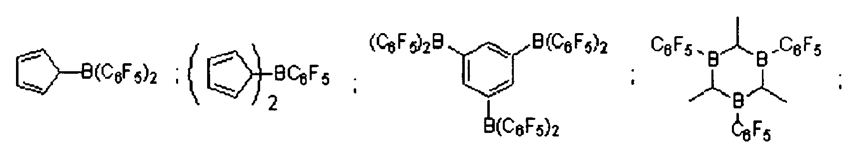 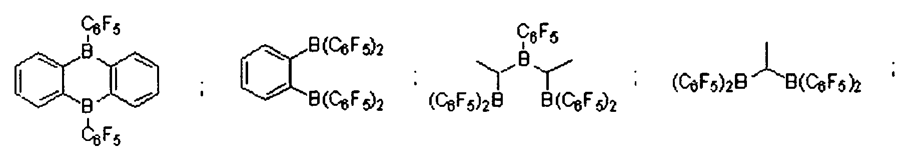 insbesondere Tris(Perfluortriphenylboran), Bortrifluorid-Etherat, Boran-Triphenylphosphinkomplex, Triphenylboran, Triethylboran und Bortrichlorid, Tris(pentafluorophenyl)-Boroxin (9CI), 4,4,5,5,-Tetramethyl-2-(pentafluorophenyl)-1,3,2-Dioxaborolane (9CI), 2-(Pentafluorophenyl)-1,3,2-Dioxaborolane (9CI), Bis(pentafluorophenyl)cyclohexylboran, Di-2,4-cyclopentadien-1-yl(pentafluorophenyl)boran (9CI), (Hexahydro-3a(1H)-pentalenyl)bis(pentafluorophenyl)boran (9CI), 1,3-[2-[Bis(pentafluorophenyl)boryl]ethyl]tetramethyldisiloxan, 2,4,6-Tris(pentafluorophenyl)borazin (7CI, 8CI, 9CI), 1,2-Dihydro-2-(pentafluorophenyl)-1,2-azaborin (9CI), 2-(Pentafluorophenyl)-1,3,2-benzodioxaborol (9CI), Tris(4-trifluoromethoxyphenyl)boran, Tris(3-trifluoromethylphenyl) boran, Tris(4-fluorophenyl)boran, Tris(2,6-difluorophenyl)boran, Tris(3,5-difluorophenyl)boran, Methyliumtriphenyltetrakis(pentafluorophenyl)borat, N,N-Dimethylaniliniumtetrakis(pentafluorophenyl)borat sowie deren Gemische, eingesetzt.

Bevorzugte nicht Bor enthaltende Katalysatoren sind ausgewählt aus: AlCl3, Aluminiumacetylacetonat, A1F3, Aluminiumtrifluormethansulfonat, Di-i-Butylaluminiumchlorid, Di-i-Butylaluminiumhydrid, Triethylaluminium, Scandium(III)chlorid, Scandium(III)fluorid, Scandium(III)hexafluoroacetylacetonat, Scandium(III)trifluormethansulfonat, Tris(cyclopentadienyl)scandium, Tris(cyclopentadienyl)yttrium, Yttrium(III)chlorid, Yttrium(III)fluorid, Yttrium(III)hexafluoroacetylacetonat, Yttrium(III)naphthenat, Lanthan(III)chlorid, Lanthan(III)fluorid, Lanthan(III)iodid, Lanthan(III)trifluormethansulfonat, Tris(cyclopentadienyl)lanthan, Cer(III)bromid, Cer(III)chlorid, Cer(III)fluorid, Cer(IV)fluorid, Cer(III)trifluoracetylacetonat, Tris(cyclopentadienyl)cer, Europium(III)fluorid, Europium(II)chlorid, Praesodym(III)hexafluoroacetylacetonat, Praesodym(III)fluorid, Praesodym(III)trifluoracetylacetonat, Samarium(III)chlorid, Samarium(III)fluorid, Samarium(III)naphthenat, Samarium(III)trifluoracetylacetonat, Ytterbium(III)fluorid, Ytterbium(III)trifluormethansulfonat und Tris(cyclopentadienyl)ytterbium sowie deren Gemische.

Auch die dehydrogenative Kondensation kann wahlweise mit oder ohne den Einsatz eines geeigneten Lösungs- oder Suspensionsmittels erfolgen. Sollte bei der Hydrosilylierung (im ersten Schritt) ein Lösemittel verwendet worden sein, kann das Präpolymer in ebendieser Lösung oder vom Lösemittel befreites Präpolymer oder aber auch umgelöstes Präpolymer bei der dehydrogenativen Kondensation eingesetzt werden. Werden hochmolekulare und damit einhergehend hochviskose Copolymere angestrebt, so kann es zur Verbesserung der Handhabbarkeit vorteilhaft sein, die Umsetzung in einem geeigneten Lösungsmittel durchzuführen. Geeignete Lösungsmittel sind z. B. Alkane, Cycloalkane, Alkylaromaten u.ä., wobei insbesondere hochsiedende Lösungs- oder Suspensionsmittel mit Siedepunkten > 90°C, vorzugsweise von >90 bis <120 °C bevorzugt sind.

Bei der dehydrogenativen Kondensation werden die Komponenten vorzugsweise in solchen Mengen eingesetzt, dass das molare Verhältnis von im Reaktionsgemisch vorhandenen SiH-Funktionen, die insbesondere aus dem Präpolymer und aus den Komponenten A und B, bevorzugt B stammen können, zu Hydroxyl-Gruppen, die insbesondere aus den Verbindungen der Formel (13) stammen, von 1 : 1 bis 1 : 5, bevorzugt von 1 : 1,05 bis 1 : 3 und besonders bevorzugt von 1 : 1,1 bis 1 : 3 beträgt.

Vorzugsweise werden mit dem erfindungsgemäßen Verfahren die erfindungsgemäßen Copolymere hergestellt.

Die erfindungsgemäßen Zusammensetzungen zeichnen sich dadurch aus, dass sie neben den erfindungsgemäßen Copolymeren noch Verbindungen vom Typ der Komponenten A und/oder B und/oder C aufweisen. Eine solche Zusammensetzung kann dadurch erhalten werden, dass wie oben beschrieben die Umsetzung der Si-H-Gruppen nicht vollständig durchgeführt wird, oder durch Verwendung eines molaren Überschusses der jeweiligen Komponente(n) oder die erfindungsgemäßen Copolymeren mit Verbindungen der Komponenten A und/oder B und/oder C nachträglich abgemischt werden. Das Massenverhältnis von erfindungsgemäßen Copolymeren zur Summe der Komponenten A, B und C beträgt vorzugsweise von 1 : 0,001 bis 1 : 0,1, bevorzugt von 1 : 0,01 bis 1 : 0,05.

Die erfindungsgemäßen Copolymeren und die erfindungsgemäßen Zusammensetzungen können als Additiv in Silikontrennbeschichtungen, vorzugsweise in UV-härtenden Silikontrennbeschichtungen verwendet werden. Bevorzugt ist die Verwendung als Anti-Vernebelungsadditiv. Solche erfindungsgemäßen Silikontrennbschichtungen, vorzugsweise UV-härtende Silikontrennbeschichtungen weisen vorzugsweise von 0,001 bis 5 Gew.-%, bevorzugt 0,01 bis 2,5 Gew.-%, besonders bevorzugt 0,1 bis 1 Gew-% an erfindungsgemäßem Copolymeren oder erfindungsgemäßer Zusammensetzung auf.

Die erfindungsgemäßen Copolymere eigenen sich insbesondere als Antivernebelungsadditive, insbesondere für UV - vernetzbare Silikonmischungen, zur Verwendung in schnellen Beschichtungssystemen mit Beschichtungsgeschwindigkeiten von 200 - 2500 m/min, bevorzugt 300 - 1000 m/min oder größer 1000 bis 2000 m/min, besonders bevorzugt 1100 bis 1600 m/min bei denen die Silikonmischungen inklusive den erfindungsgemäßen Antivernebelungsadditive auf die zu beschichtenden Oberflächen aufgebracht werden.

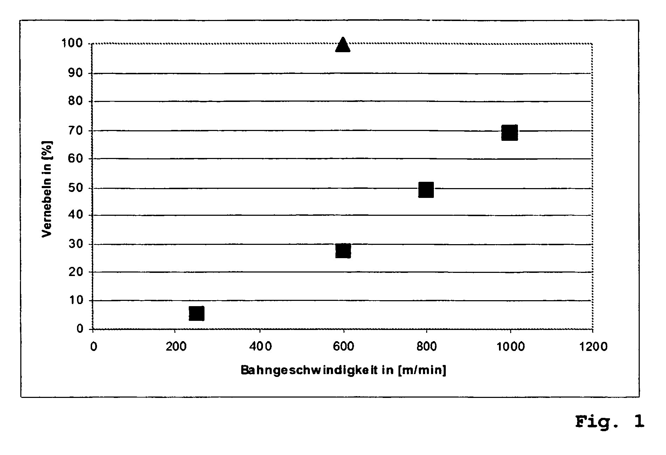

Die Erfindung wird an Hand der Figur 1 näher erläutert, ohne dass die Erfindung darauf beschränkt sein soll. In Fig. 1 sind die Ergebnisse des Beispiels 20 graphisch dargestellt. Es sind Werte für die Vernebelung in Abhängigkeit von der Bahngeschwindigkeit für zwei verschiedene Formulierungen dargestellt. Es ist zu erkennen, dass die Vernebelungsneigung durch Zusatz des erfindungsgemäßen Additivs deutlich verringert wird.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele und experimentelle Details:

Die Bestimmung des mittleren Verzweigungsgrads k = (M+MH)/(T+Q) erfolgte durch ins Verhältnis setzen der jeweiligen Flächenintegrale eines 29Si-NMR-Spektrums.

GPC-Messungen wurden mit folgenden Parametern durchgeführt: Gerät HP1100, Länge der Säule: 65 cm, ID: 0,80 cm, Temperatur: 30 °C, Mobile Phase: Tetrahydrofuran, Fließrate: 1,0 m/min, Probenkonzentration: 10,00 g/l, Detektor: HP RI, kalibriert gegen Polystyrol 162 - 2.570.000 g/mol.

Der SiH-Wert wurde gasvolumetrisch bestimmt indem die Zersetzung einer aliquoten Probe mit Natriumbutylatlösung an einer Gasbürette durchgeführt wurde.

Ein Verfahren zur enzymatischen Veresterung von Carbonsäureestern ist in DE102008004726.0 beschrieben.

Die in den Beispielen 7, 8, 9, 13, 14, 15, 16 und 17 angegeben Viskositäten wurden an einem Rotationsviskosimeter vom Typ Stress-Tech Rheometer der Firma Reologica bei 25 °C gemessen Kegel/Platte mit Kegel = 4°, Plattendurchmesser: 40 mm. Die in den Beispielen 2, 4 und 5 angegebenen Viskositäten wurden an einem Rotationsviskosimeter Rheoplus MCS301 der Firma Anton Paar bei 25 °C gemessen mit Platte/Platte, wobei der Plattendurchmesser 50 mm ist und der Plattenabstand 1 mm für das Beispiel 5 bzw. der Plattenabstand 2 mm für die Beispiele 2 und 4.

Die in den nachfolgenden Beispielen eingesetzten linearen, endständigen Wasserstoffsiloxane können mit dem in EP 1439200 beschriebenen Verfahren hergestellt werden. Ein Verfahren zur Herstellung verzweigter Wasserstoffsiloxane mit T-Einheiten ist in DE102007055485.2 und ein Verfahren zur Herstellung verzweigter Wasserstoffsiloxane mit Q-Einheiten ist in DE102008041601.0 beschrieben.

Als Edelmetallkatalysator wurde in den nachfolgenden Beispielen ein handelsüblicher Karstedtkatalysator eingesetzt, der entsprechend EP 1520870 mit Ethylen begast wurde.

### Beispiel 1: nicht erfindungsgemäß

In einem 500 ml Vierhalskolben mit KPG-Rührer, Kontaktthermometer und Rückflusskühler wurden 1,5 g Octadien in 83,4 g Toluol vorgelegt und auf 80°C erwärmt. Die Mischung wurde mit 5 Massen-ppm Pt bezogen auf den Gesamtansatz eines Karstedt-Katalysators versetzt und eine Mischung aus 22,2 g eines linearen endständigen Wasserstoffsiloxans mit einem SiH-Wert von 0,86 val/kg und 59,7 g eines linearen endständigen Wasserstoffsiloxans mit einem SiH-Wert von 0,32 val/kg innerhalb einer Stunde zugetropft und eine weitere Stunde bei 80°C bis zum gewünschten SiH-Umsatz gerührt.

Zu 80,7 g der toluolischen Lösung des Präpolymers wurden bei Raumtemperatur 0,43 g Octadien gegeben, auf 80°C erwärmt und zwei Stunden bei 80°C gerührt. Das Lösemittel wurde im Vakuum entfernt und ein leicht gelbes, klares und fließfähiges Polymer erhalten. M_{w}=73.032, Mₙ=44.036

### Beispiel 2: erfindungsgemäß

In einem 500 ml Vierhalskolben mit KPG-Rührer, Kontaktthermometer und Rückflusskühler wurden 14 g Bis-Undecylensäureester einer Polyoxyalkylenverbindung (mittleres Molgewicht ca. 2847 g/mol, Propylenoxydanteil/Ethylenoxydanteil = 50:50) in 68 g Toluol vorgelegt, auf 80°C erwärmt und 5 Massen-ppm Pt bezogen auf den Gesamtansatz eines Karstedt-Katalysators zugegeben. Es wurden 54 g eines linearen endständigen Wasserstoffsiloxans mit einem SiH-Wert von 0,32 val/kg innerhalb von 30 Minuten zugetropft und weitere 2,5 Stunden unter SiH-Wert-Kontrolle bei 80°C gerührt. Bei Raumtemperatur wurden zu 57,8 g der Reaktionsmischung 2,3 g eines verzweigten endständigen Wasserstoffsiloxans mit durchschnittlich 5 Verzweigungen und einem SiH-Wert von 1,039 val/kg, 200 mg Glykol, 30 g Toluol sowie 3,0 mg Trispentafluorphenylboran unter Rühren zugegeben. Die Temperatur wurde langsam auf 60°C erhöht und bei 60 °C so lange gehalten bis vollständiger SiH-Umsatz festgestellt wurde. Das Lösemittel wurde im Vakuum entfernt und ein klares polymeres Reaktionsprodukt mit einer dynamischen Viskosität von 670.000 mPas erhalten. Das Reaktionsprodukt wurde als 33 %-ige Lösung in TEGO^{®} RC 711 (ein Produkt der Evonik Goldschmidt GmbH) anwendungstechnisch untersucht. GPC: M_{w} = 392.013, Mₙ = 34.047

### Beispiel 3: erfindungsgemäß

In einem 500 ml Vierhalskolben mit KPG-Rührer, Kontaktthermometer und Rückflusskühler wurden 12 g Bis-Undecylensäureester einer Polyoxyalkylenverbindung (mittleres Molgewicht ca. 2847 g/mol, Propylenoxydanteil/Ethylenoxydanteil = 50:50) in 63 g Toluol vorgelegt, auf 80°C erwärmt und 5 Massen-ppm Pt bezogen auf den Gesamtansatz eines Karstedt-Katalysators zugegeben. Eine Mischung aus 46 g eines linearen endständigen Wasserstoffsiloxans mit einem SiH-Wert von 0,32 val/kg und 4,6 g eines verzweigten endständigen Wasserstoffsiloxans mit durchschnittlich 5 Verzweigungen und einem SiH-Wert von 1,039 val/kg wurden innerhalb von 50 Minuten zugetropft.

Bei Raumtemperatur wurden zu 101 g der Reaktionsmischung 0,31 g Glykol und 57 mg Trispentafluorphenylboran zugegeben. Es wurde langsam auf 60 °C erwärmt. Innerhalb von 30 Minuten vergelte die Reaktionsmischung.

### Beispiel 4: erfindungsgemäß

In einem 500 ml Vierhalskolben mit KPG-Rührer, Kontaktthermometer und Rückflusskühler wurden 29,8 g Bis-Undecylensäureester einer Polyoxyalkylenverbindung (mittleres Molgewicht ca. 2847 g/mol, Propylenoxydanteil/Ethylenoxydanteil = 48:52) in 108 g Toluol vorgelegt, auf 80 °C erwärmt und 5 Massen-ppm Pt bezogen auf den Gesamtansatz eines Karstedt-Katalysators zugegeben. Es wurde eine Mischung aus 22,2 g eines linearen endständigen Wasserstoffsiloxans mit einem SiH-Wert von 0,86 val/kg und 59,7 g eines linearen endständigen Wasserstoffsiloxans mit einem SiH-Wert von 0,32 val/kg innerhalb einer Stunde zugetropft und weitere 1,5 Stunden bei 80°C gerührt.

Bei Raumtemperatur wurden 66,4 g der Reaktionsmischung mit 3,65 g eines verzweigten Wasserstoffsiloxans mit durchschnittlich 5 Verzweigungen und einem SiH-Wert von 1,039 val/kg, 0,29 g Glykol und mit insgesamt 70 mg Trispentafluorphenylboran versetzt und langsam auf 60 °C erwärmt. Nach insgesamt drei Stunden war vollständiger SiH-Umsatz erreicht. Das Lösemittel wurde im Vakuum entfernt und ein Polymer mit einer dynamischen Viskosität von 1.528.000 mPas als Produkt erhalten. Das Reaktionsprodukt wurde als 35 %ige Lösung in TEGO^{®} RC 711 anwendungstechnisch untersucht.

### Beispiel 5: erfindungsgemäß

In einem 500 ml Vierhalskolben mit KPG-Rührer, Kontaktthermometer und Rückflusskühler wurden 9,4 g Bis-Undecylensäureester einer Polyoxyalkylenverbindung (mittleres Molgewicht ca. 1700 g/mol, Propylenoxydanteil/Ethylenoxydanteil = 65:35) in 63 g Toluol vorgelegt, auf 80 °C erwärmt und 5 Massen-ppm Pt bezogen auf den Gesamtansatz eines Karstedt-Katalysators zugegeben. Es wurden 54 g eines linearen endständigen Wasserstoffsiloxans mit einem SiH-Wert von 0,32 val/kg innerhalb von 1,5 Stunden zugetropft und weitere 30 Minuten bei 80°C gerührt.

Bei Raumtemperatur wurden zu 70,1 g der Reaktionsmischung 3,0 g verzweigtes endständiges Wasserstoffsiloxan mit durchschnittlich 5 Verzweigungen und einem SiH-Wert von 1,039 val/kg, 0,25 g Glykol und 39 mg (500 ppm) Trispentafluorphenylboran zugegeben. Die Mischung wurde langsam auf 60°C erwärmt und nach einer Stunde vollständiger SiH-Umsatz erzielt. Das Lösemittel wurde im Vakuum entfernt und ein klares Polymer mit einer dynamischen Viskosität von 31.200 mPas erhalten. GPC: M_{w} = 38.475; Mₙ = 13.044

### Beispiel 6: erfindungsgemäß

In einem 500 ml Vierhalskolben mit KPG-Rührer, Kontaktthermometer und Rückflusskühler wurden 10,4 g einer Polyoxyalkylenverbindung (mittleres Molgewicht ca. 2847 g/mol, Propylenoxydanteil/Ethylenoxydanteil = 50:50) in 56,4 g Toluol vorgelegt, auf 80 °C erwärmt und 56 mg Trispentafluorphenylboran zugegeben. Anschließend wurden 46 g eines linearen endständigen Wasserstoffsiloxans (SiH-Wert = 0,32 val/kg) unter Wasserstoffentwicklung zugetropft. Es wurde vollständiger Umsatz der SiH-Funktionen beobachtet. Es wurde eine toluolische Lösung eines Präpolymers erhalten.

Zu 50 g der toluolischen Lösung des Präpolmyers wurden 2,0 g eines verzweigten endständigen Wasserstoffsiloxans mit durchschnittlich 5 Verzweigungen und einem SiH-Wert von 1,039 val/kg und 0,18 g Glykol gegeben und weitere drei Stunden bei 75 °C gerührt. Das Lösemittel wurde im Vakuum entfernt und ein fließfähiges Polymer erhalten. Es wurde zu einer 35 %-igen Lösung (Gew.-%) in TEGO^{®} RC 711 verdünnt und anwendungstechnisch untersucht. GPC: M_{w} = 38.475; Mₙ = 13.044

### Beispiel 7: erfindungsgemäß

Zu 56,6 g der toluolische Lösung eines Präpolymers aus Beispiel 6 wurden 5,0 g eines verzweigten endständigen Wasserstoffsiloxans mit durchschnittlich 5 Verzweigungen und einem SiH-Wert von 1,039 val/kg und 5,2 g PEG400 sowie 0,36 g Glykol gegeben und drei Stunden auf 60°C erwärmt. Das Lösemittel wurde im Vakuum entfernt und ein klares Polymer mit einer dynamischen Viskosität von 123.200 mPas erhalten. GPC: M_{w} = 237.644; Mₙ = 2.014

### Beispiel 8: erfindungsgemäß

In einem 2000 ml Vierhalskolben mit KPG-Rührer, Kontaktthermometer und Rückflusskühler wurden 111,3 g Bis-Undecylensäureester einer Polyoxyalkylenverbindung (mittleres Molgewicht ca. 1700 g/mol, Propylenoxydanteil/Ethylenoxydanteil = 65:35) in 545,5 g Toluol vorgelegt, auf 80 °C erwärmt und 5 Massen-ppm Pt bezogen auf den Gesamtansatz eines Karstedt-Katalysators zugegeben. Es wurde eine Mischung aus 117,7 g eines endständigen Wasserstoffsiloxans mit einem SiH-Wert von 0,86 val/kg und 316,4 g eines linearen endständigen Wasserstoffsiloxans mit einem SiH-Wert von 0,32 val/kg innerhalb von zwei Stunden zugetropft.

Bei Raumtemperatur wurden 915 g der toluolischen Lösung des Präpolymers mit 32,7 g eines verzweigten Wasserstoffsiloxans mit durchschnittlich 5 Verzweigungen und einem SiH-Wert von 1,123 val/kg, 3,9 g Ethylenglykol sowie 500 Massen-ppm (470 mg) Trispentafluorphenylboran zugegeben und langsam auf 50 °C erwärmt. Innerhalb einer Stunde wurde vollständiger SiH-Umsatz festgestellt. Das Lösemittel wurde im Vakuum entfernt und ein klares, gelbliches Polymer mit einer dynamischen Viskosität von 69.700 mPas erhalten. GPC: M_{w} = 60940, Mₙ = 8292

### Beispiel 9: erfindungsgemäß

In einem 2000 ml Vierhalskolben mit KPG-Rührer, Kontaktthermometer und Rückflusskühler wurden 94 g Bis-Undecylensäureester einer Polyoxyalkylenverbindung (mittleres Molgewicht ca. 1700 g/mol, Propylenoxydanteil/Ethylenoxydanteil = 65:35) in 653 g Toluol vorgelegt, auf 80 °C erwärmt und 2 Massen-ppm Pt bezogen auf den Gesamtansatz eines Karstedt-Katalysators zugegeben. Es wurden 540 g eines linearen endständigen Wasserstoffsiloxans mit einem SiH-Wert von 0,32 val/kg innerhalb von zwei Stunden zugetropft. Es wurde eine toluolische Lösung eines Präpolymers erhalten.

Bei Raumtemperatur wurden 1205 g der toluolischen Lösung des Präpolymers mit 31,3 g eines verzweigten Wasserstoffsiloxans mit durchschnittlich 5 Verzweigungen und einem SiH-Wert von 1,123 val/kg, 3,8 g Ethylenglykol sowie 500 Massen-ppm Trispentafluorphenylboran versetzt und langsam auf 50°C erwärmt. Innerhalb von drei Stunden wurde vollständiger SiH-Umsatz festgestellt. Das Lösemittel wurde im Vakuum entfernt und ein klares, gelbliches Polymer mit einer dynamischen Viskosität von 30.600 mPas erhalten. GPC: M_{w} = 74.529, Mₙ = 16.627

### Beispiel 10: erfindungsgemäß

In einem 500 ml Vierhalskolben mit KPG-Rührer, Kontaktthermometer und Rückflusskühler wurden 9,4 g Bis-Undecylensäureester einer Polyoxyalkylenverbindung (mittleres Molgewicht ca. 1700 g/mol, Propylenoxydanteil/Ethylenoxydanteil = 65:35) in 63 g Toluol vorgelegt, auf 80 °C erwärmt und 5 Massen-ppm Pt bezogen auf den Gesamtansatz eines Karstedt-Katalysators zugegeben. Es wurden 54 g eines linearen endständigen Wasserstoffsiloxans mit einem SiH-Wert von 0,32 val/kg zugetropft und eine Stunde bei 80°C gerührt.

Bei Raumtemperatur wurden zu 60,6 g der toluolischen Lösung der Vorstufe 1,88 g B i s-Undecylensäureester einer Polyoxyalkylenverbindung (mittleres Molgewicht ca. 1700 g/mol, Propylenoxydanteil/ Ethylenoxydanteil = 65:35) gegeben, auf 80 °C erwärmt und weitere zwei Stunden bei 80°C gerührt. Bei Raumtemperatur wurden zu 59,5 g der Lösung 0,45 g eines verzweigten Wasserstoffsiloxans mit durchschnittlich 5 Verzweigungen und einem SiH-Wert von 1,123 val/kg sowie 0,16 g Octadien zugegeben und weitere zwei Stunden bei 80°C bis zum vollständigen SiH Umsatz gerührt. Das Lösemittel wurde im Vakuum entfernt und ein klares fließfähiges Polymer erhalten. M_{w} = 54.304, Mₙ = 7.176

### Beispiel 11: erfindungsgemäß

In einem 500 ml Vierhalskolben mit KPG-Rührer, Kontaktthermometer und Rückflusskühler wurden 0,89 g Octadien in 61 g Toluol vorgelegt, auf 80°C erwärmt und 5 Massen-ppm Pt bezogen auf den Gesamtansatz eines Karstedt-Katalysators zugegeben. Es wurden 59,7 g eines linearen endständigen Wasserstoffsiloxans mit einem SiH-Wert von 0,32 val/kg zugetropft und der SiH-Wert kontrolliert. Bei Raumtemperatur wurden zu 51,6 g der Lösung weitere 0,21 g Octadien und 1,83 g eines verzweigten endständigen Wasserstoffsiloxans mit durchschnittlich 5 Verzweigungen und einem SiH-Wert von 1,123 val/kg zugegeben und bis zum vollständigen SiH-Umsatz bei 80°C gehalten. Eine Teilmenge der Lösung wurde mit TEGO^{®} RC 902 gemischt und im Vakuum vom Lösemittel befreit, so dass eine 10 %ige Lösung (Gew.-%) entstand, die anwendungstechnisch untersucht wurde. Eine weitere Teilmenge wurde im Vakuum vom Lösemittel befreit und ein klares Polymer erhalten. GPC: M_{w} = 645.204, Mₙ = 74.225

### Beispiel 12: erfindungsgemäß

In einem 500 ml Vierhalskolben mit KPG-Rührer, Kontaktthermometer und Rückflusskühler wurden 1,5 g Octadien in 83,4 g Toluol vorgelegt, auf 80°C erwärmt und 5 Massen-ppm Pt bezogen auf den Gesamtansatz eines Karstedt-Katalysators zugegeben. Es wurden 59,7 g eines linearen endständigen Wasserstoffsiloxans mit einem SiH-Wert von 0,32 val/kg und 22,2 g eines linearen endständigen Wasserstoffsiloxans mit einem SiH-Wert von 0,86 val/kg zugetropft und zwei Stunden bei 80°C gerührt. Bei Raumtemperatur wurden zu 60,3 g der Reaktionsmischung weitere 0,33 g Octadien und 1,27 g eines verzweigten endständigen Wasserstoffsiloxans mit durchschnittlich 5 Verzweigungen und einem SiH-Wert von 1,123 val/kg zugegeben und bis zum vollständigen SiH-Umsatz bei 80°C gerührt. Die Lösung wurde mit TEGO^{®} RC 902 gemischt und im Vakuum vom Lösemittel befreit, so dass eine 10 %-ige Lösung (Gew-%) entstand, die anwendungstechnisch untersucht wurde. GPC: M_{w} = 542.333 Mₙ = 82.321

### Beispiel 13: erfindungsgemäß

In einem 500 ml Vierhalskolben mit KPG-Rührer, Kontaktthermometer und Rückflusskühler wurden 7,4 g Bis-Undecylensäureester von Hexandiol in 119 g Toluol vorgelegt, auf 80°C erwärmt und 3 Massen-ppm Pt bezogen auf den Gesamtansatz eines Karstedt-Katalysators zugegeben. Es wurden 112 g eines linearen endständigen Wasserstoffsiloxans mit einem SiH-Wert von 0,34 val/kg zugetropft und weitere 15 Minuten bei 80°C gerührt und der SiH-Wert kontrolliert. Es wurde eine toluolische Lösung eines Präpolymers erhalten.

Bei Raumtemperatur wurden zu 106,4 g der toluolischen Lösung 1,83 g Bis-Undecylensäureester von Hexandiol und 3,83 g eines verzweigten endständigen Wasserstoffsiloxans mit durchschnittlich 5 Verzweigungen und einem SiH-Wert von 1,123 val/kg zugegeben, auf 80°C erwärmt und nach 30 Minuten vollständiger SiH-Umsatz erhalten. Eine Teilmenge der Lösung wurde mit TEGO^{®} RC 902 gemischt und im Vakuum vom Lösemittel befreit, so dass eine 10 %ige Lösung (Gew.-%) entstand, die anwendungstechnisch untersucht wurde. Eine weitere Teilmenge wurde im Vakuum vom Lösemittel befreit und ein klares Polymer mit einer dynamischen Viskosität von 149.000 mPas erhalten. GPC: M_{w} = 740.149 Mₙ = 61.508

### Beispiel 14: erfindungsgemäß

52,1 g der toluolischen Lösung eines Präpolymers aus Beispiel 13 wurden mit 0,22 g Octadien und 1,88 g eines verzweigten endständigen Wasserstoffsiloxans mit durchschnittlich 5 Verzweigungen und einem SiH-Wert von 1,123 val/kg versetzt, auf 80°C erwärmt und nach einer Stunde vollständiger SiH-Umsatz erhalten. Eine Teilmenge der Lösung wurde mit TEGO^{®} RC 902 gemischt und im Vakuum vom Lösemittel befreit, so dass eine 10 %ige Lösung (Gew.-%) entstand, die anwendungstechnisch untersucht wurde. Eine weitere Teilmenge wurde im Vakuum vom Lösemittel befreit und ein klares Polymer mit einer dynamischen Viskosität von 62.200 mPas erhalten. GPC: M_{w} = 208682 Mₙ = 57392

### Beispiel 15: erfindungsgemäß

In einem 500 ml Vierhalskolben mit KPG-Rührer, Kontaktthermometer und Rückflusskühler wurden bei Raumtemperatur 69,5 g der Reaktionsmischung der Vorstufe aus Beispiel 13 mit 1,2 g Bisundecylensäureester von Hexandiol vorgelegt und eine Stunde lang bei 80 °C gerührt. Dann wurde unter Rühren bei 80°C 1,7 g eines verzweigten endständigen Wasserstoffsiloxans mit durchschnittlich 5 Verzweigungen und einem SiH-Wert von 1,123 val/kg innerhalb von 10 Minuten zugtropft und eine weitere Stunde bei 80°C bis zum vollständigen SiH-Umsatz gerührt. Eine Teilmenge der Lösung wurde mit TEGO^{®} RC 902 gemischt und im Vakuum vom Lösemittel befreit, so dass eine 10 %ige Lösung (Gew.-%) entstand, die anwendungstechnisch untersucht wurde. Eine kleine Teilmenge des Reaktionsproduktes wurde direkt im Vakuum vom Lösemittel befreit und ein klares, fließfähiges Polymer mit einer dynamischen Viskosität von 40.500 mPas erhalten. GPC: M_{w} = 196.304, Mₙ = 40.574

### Beispiel 16: erfindungsgemäß

In einem 1000 ml Vierhalskolben mit KPG-Rührer, Kontaktthermometer und Rückflusskühler wurden bei Raumtemperatur 2,8 g Octadien und 115 g Toluol vorgelegt, auf 80°C erwärmt und 5 Massen-ppm Pt bezogen auf den Gesamtansatz eines Karstedt-Katalysators zugegeben. Unter Rühren wurden bei 80°C 112 g eines linearen endständigen Wasserstoffsiloxans mit einem SiH-Wert von 0,34 val/kg innerhalb von 40 Minuten zugetropft und weitere 40 Minuten bei 80°C gerührt bis zum vollständigen SiH-Umsatz.

63,3 g der Vorstufe wurden unter Vakuum vom Lösemittel befreit und erneut in 30 g Toluol gelöst. Zu 60,4 g dieser Lösung wurden bei Raumtemperatur 1,2 g eines verzweigten endständigen Wasserstoffsiloxans mit durchschnittlich 5 Verzweigungen und einem SiH-Wert von 1,123 val/kg gegeben, auf 80°C erwärmt und eine weitere Stunde bis zum vollständigen SiH-Umsatz gerührt. Eine Teilmenge der Lösung wurde in TEGO^{®} RC 902 gelöst, die Mischung unter Vakuum vom Lösemittel befreit und eine 20 %ige Lösung (Gew.-%) erhalten, die anwendungstechnsich untersucht wurde.

Eine kleine Teilmenge wurde direkt unter Vakuum vom Lösemittel befreit und ein klares Produkt mit einer dynamischen Viskosität von 62.000 mPas erhalten. GPC: M_{w} = 493.423, Mₙ = 22.267

### Beispiel 17: erfindungsgemäß

In einem 1000 ml Vierhalskolben mit KPG-Rührer, Kontaktthermometer und Rückflusskühler wurden bei Raumtemperatur 2,8 g Octadien und 115 g Toluol vorgelegt, auf 80°C erwärmt und 5 Massen-ppm Pt bezogen auf den Gesamtansatz eines Karstedt-Katalysators zugegeben. Unter Rühren wurden bei 80°C 112 g eines endständigen Wasserstoffsiloxans mit einem SiH-Wert von 0,34 val/kg innerhalb von 40 Minuten zugetropft und weitere 45 Minuten bei 80°C gerührt bis zum vollständigen SiH-Umsatz. 76,9 g der Reaktionsmischung wurden anschließend bei 80°C unter Rühren mit 3,0 g eines verzweigten endständigen Wasserstoffsiloxans mit durchschnittlich 5 Verzweigungen und einem SiH-Wert von 1,123 val/kg über 1,5 Stunden tropfenweise versetzt. Eine Teilmenge der Lösung wurde in TEGO^{®} RC 902 gelöst, die Mischung unter Vakuum vom Lösemittel befreit und eine 10 %ige Lösung (Gew-%) erhalten, die anwendungstechnisch untersucht wurde. Eine kleine Teilmenge wurde direkt unter Vakuum vom Lösemittel befreit und ein klares Produkt mit einer dynamischen Viskosität von 92.000 mPas erhalten. GPC: M_{w} = 524.057, Mₙ = 47.002

### Beispiel 18: Vergleich der Vernebelungsneigung

Im nachfolgenden Beispiel wurde die Eignung der in den Beispielen 1 bis 17 beschriebenen Copolymere als Antivernebelungsadditive für UV - vernetzbare Silikonmischungen getestet.

Die Reduzierung der Aerosolbildung durch die erfindungsgemäßen Additive wurde mittels eines Walzenzerstäubers bestimmt. Die beiden Walzen rotieren mit einer Geschwindigkeit von 1115 oder 1571 m/min. Die Aerosolbildung wurde mit dem Dusttrack Aerosol Monitor Modell 8520 gemäß Bedienungsanleitung bestimmt. Die Probennahme erfolgte in einem Abstand von 8 cm vom Walzenspalt. Die Obergrenze des Messbereichs des Dusttrack liegt bei 150 ppm. Die Menge an aufgebrachter Formulierung betrug jeweils 4 g Silikonmischung pro Messung. Für eine Messung wurde das Silikon aufgetragen, die Walzen auf die gewünschte Geschwindigkeit beschleunigt und die Werte aufgenommen. Es wurden die Werte der Formulierung mit Additiv an ihrem Maximum in Relation zum Wert der Formulierung ohne Additiv am Maximum gesetzt.

Auf dem Walzenzerstäuber wurden die in Tabelle 1 angegebenen Formulierungen getestet. Als Vergleichsubstanzen wurden die Formulierungen getestet, die keine Additive aufwiesen. Die Messwerte für die Formulierungen ohne Additiv wurden als 100 % Vernebelung definiert.

**Tabelle 1: Zusammensetzung der Standardfozrnulierungen A und B in Massenteilen**

| Silikon | Standardformulierung A | Standardformulierung B |
|---|---|---|
| TEGO^{®} RC 902 | 70 | 50 |
| TEGO^{®} RC 922 | 0 | 20 |
| TEGO^{®} RC 711 | 30 | 30 |
| TEGO^{®} Photoinitiator A17 | 2 | 3 |
| Additiv | 0,4 | 0,4 |

Die Ergebnisse zum Test der Vernebelungsneigung sind in den Tabellen 2 und 3 angegeben.

Die Vergleichsversuche zeigen, dass der Zusatz der erfindungsgemäßen Copolymere als Antivernebelungs-Additive, die Aerosolbildung der strahlenhärtenden Siliconbeschichtungssysteme in schnellen Beschichtungsprozessen in beiden Standardformulierungen signifikant reduziert.

### Beispiel 19: Anwendungstechnische Untersuchungen.

Für die Trennwertbestimmung und für die Kurzzeitrestklebekräfte wurde der in der Beschichtungsindustrie eingesetzte Finat 10 Test (Trennwerte) und Finat 11 Test (Kurzzeitrestklebekräfte, subsequent adhesion) eingesetzt. Als Substrat wurde die BoPP Folie (Poly M 514 der Firma Polinas) eingesetzt. Als Vergleich wurden die Standardformulierungen A und B ohne erfindungsgemäßes Additiv eingesetzt. Die Additive wurden entweder pur in die Silikonformulierung eingearbeitet oder wie im jeweiligen Beispiel beschrieben zugesetzt.

Finat FTM 10 Test: Trennwertprüfung mit Kleber TESA 7475/2,5 cm ein Tag bei 40°C gelagert. Dieses Testverfahren ist angelehnt an FINAT FTM #10 (Fédération Internationale des Fabricants et Transformateurs d'Adhesifs et Thermocollants sur Papier et autre Supports, Den Haag). Der Trennwert, auch Trennkraftwert, Trennkraft oder Releasewert genannt, ist die Kraft, die benötigt wird, einen Klebestreifen unter festgelegten Bedingungen mit einem bestimmten Winkel und bestimmter Geschwindigkeit von einem beschichteten Trennmaterial zu trennen.

Härtungstest: Kurzzeitrestklebkraftbestimmung nach Finat FTM 11. Dieses Testverfahren ist angelehnt an FINAT FTM #11 (Fédération Internationale des Fabricants et Transformateurs d'Adhesifs et Thermocollants sur Papier et autre Supports, Den Haag).

Die Ergebnisse der anwendungstechnischen Untersuchungen sind ebenfalls den Tabellen 2 und 3 zu entnehmen.

**Tabelle 2: Ergebnisse der anwendungstechnischen Untersuchung in Standardformulierung A**

| Beispiel | Reduktion des Vernebelns in [%] bei 1115 m/min | Reduktion des Vernebelns in [%] bei 1571 m/min | Trennwerte | Restklebkräfte |
|---|---|---|---|---|
| 1 | -15% | 0% | + | + |
| 2 | -86% | -60% | - | + |
| 4 | -92% | -83% | + | ++ |
| 5 | -74% | -33% | ++ | - |
| 6 | -47% | nb*) | ++ | - |
| 7 | -74% | -47% | + | + |
| 8 | -60% | -52% | + | + |
| 9 | -70% | -40% | + | ++ |
| 10 | -74% | -60% | + | + |
| 11 | -58% | -47% | ++ | + |
| 12 | -59% | -37% | + | + |
| 13 | -68% | -40% | ++ | + |
| 14 | -59% | -18% | ++ | - |
| 15 | -55% | -33% | ++ | - |
| 16 | -65% | -43% | ++ | - |
| 17 | -81% | -33% | ++ | + |

| | | | | |
|---|---|---|---|---|
| *) nb = wurde nicht bestimmt | | | | |

**Tabelle 3: Ergebnisse der anwendungstechnischen Untersuchung in Standardformulierung B**

| Beispiel | Reduktion des Vernebelns in [%] bei 1115 m/min | Reduktion des Vernebelns in [%] bei 1571 m/min | Trennwerte | Restklebkräfte |
|---|---|---|---|---|
| 1 | -8% | -17% | + | + |
| 8 | -68% | -44% | ++ | + |
| 9 | -51% | -57% | + | + |
| 10 | -54% | -43% | + | + |
| 11 | -62% | -54% | + | + |
| 12 | -56% | -60% | ++ | + |
| 13 | -47% | -42% | + | - |
| 14 | -35% | -50% | + | - |
| 15 | -33% | -34% | + | - |
| 16 | -53% | -33% | ++ | + |
| 17 | -69% | -54% | ++ | + |

| | | | | |
|---|---|---|---|---|
| *) nb = wurde nicht bestimmt | | | | |

**Tabelle 4: Legenden zur Bewertung in den Tabellen 2 und 3:**

| | | |
|---|---|---|
| Trennwerte: | ++ | Keine Beeinträchtigung |
| | + | Geringe Beeinträchtigung |
| | - | Beeinträchtigung vorhanden |
| Restklebekräfte | ++ | Keine Beeinträchtigung |
| | + | Geringe Beeinträchtigung |
| | - | Beeinträchtigung vorhanden |

**Beispiel 20:** Test der Vernebelungsneigung in einer Pilot-Anlage Die erfindungsgemäßen Additive wurden auf einer Pilotanlage der Firma Polytype (Fribourg, Schweiz) untersucht. Dabei wurde die Standardformulierung A als Vergleich ohne erfindungsgemäßes Additiv mit einem 5-Walzen Auftragswerk aufgetragen. Anschließend wurde ein erfindungsgemäßes Additiv mit 0,4% w/w Einsatzkonzentration der Standardformulierung A zugesetzt und Beschichtungsgeschwindigkeiten zwischen 200 und 1000 m/min eingestellt. Die Aerosolbildung wurde mit dem Dusttrack Aerosol Monitor Modell 8520 bestimmt. Die Probennahme erfolgte zwischen der Siliconauftragswalze und Walzenspalt im Abstand von 15 cm. Das Beschichtungsgewicht wurde mittels Röntgenfluoreszenzanalyse bestimmt und betrug 1,1 g/m². Die Ergebnisse sind in Figur 1 dargestellt. Darin geben Dreiecke Messwerte für die Formulierung ohne Additiv und Quadrate Messwerte für die Formulierung mit Copolymer gemäß Beispiel 10 als Additiv wieder.

Die Vergleichsversuche auf der Pilotanlage zeigen, dass der Zusatz des erfindungsgemäßen Additivs von Beispiel 10, die Aerosolbildung der vernetzbaren Siliconstandardformulierung, auch auf der Pilotanlage bei hohen Geschwindigkeiten deutlich reduziert.

## Patentansprüche

1. Copolymere der Formel (1)
[A']_{a'}[B']_{b'}[C']_{c'}[D']_{d'}, (1)
mit
A' = Baustein der Formel (2) 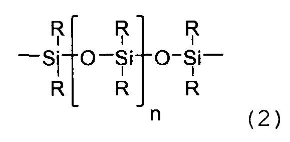 mit n = 2 bis 498,
B' = Baustein der Formel (3) 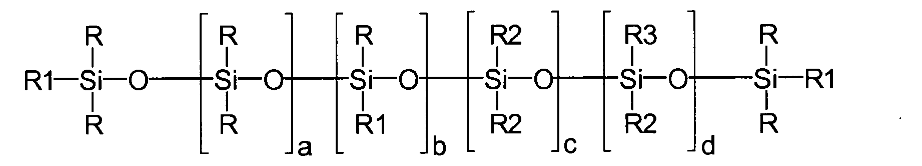 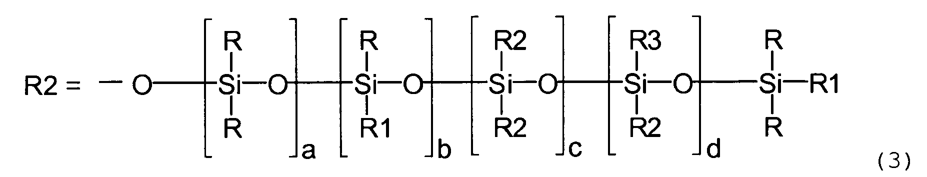
C' gleiche oder verschiedene Bausteine der Formeln (4) und/oder (5)
-CH₂-CH₂-Q1-CH₂-CH₂- (4)
-O-Q2-O- (5)
D' gleiche oder verschiedene Bausteine der Formeln (6) und/oder (7)
-CH₂-CH₂-Q1-CH=CH₂ (6)
-O-Q2-OH (7)
worin
a unabhängig voneinander 0 bis 500 ist
b unabhängig voneinander 0 bis 60 ist,
c unabhängig voneinander 0 bis 10 ist,
d unabhängig voneinander 0 bis 10 ist, mit der Maßgabe, dass c + d größer-gleich 1 ist,
R unabhängig von einander ein Rest aus der Gruppe linearer, cyclischer oder verzweigter, aliphatischer oder aromatischer, gesättigter oder ungesättigter Kohlenwasserstoffreste mit 1 bis zu 20 C-Atomen ist,
R1 unabhängig voneinander eine Bindung zu einem Baustein oder R ist,
R3 unabhängig voneinander R1 oder ein mit Heteroatomen substituierter, funktioneller, organischer, gesättigter oder ungesättigter Rest ist,
mit der Maßgabe, dass mindestens ein R1 eine Bindung zu einem Baustein ist und dass die mittlere Anzahl der T- und Q-Einheiten pro Baustein B' jeweils nicht größer als 20, die mittlere Anzahl der D-Einheiten pro Baustein B' nicht größer als 2000 ist,
a', b', c' und d' Indizes sind, die die molaren Anteile der Bausteine A' bis D' in der Verbindung der Formel (1) angeben und a' von 20 bis 70 %, vorzugsweise 30 bis 60 % und bevorzugt 35 bis 50 %, b' größer 0 bis 20 %, vorzugsweise 0,1 bis 15 %, bevorzugt 0,1-10%, c' = 30 bis <60 %, vorzugsweise 30 bis 50 % und d' größer-gleich 0, vorzugsweise > 0 bis 20 %, bevorzugt von 1 bis 15 % beträgt,
Q1 = eine Bindung oder ein organischer Rest und
Q2 = ein organischer Rest.

2. Copolymere nach Anspruch 1, **dadurch gekennzeichnet, dass** zumindest ein Baustein der Formel C' ein Baustein der Formel (4) ist, wobei Q1 eine Bindung oder ein organischer Rest, ausgewählt aus linearen, cyclischen oder verzweigten, aliphatischen oder aromatischen Kohlenwasserstoffresten mit 1 bis 30 Kohlenstoffatomen, Esterresten aus einer Dicarbonsäure mit 2 bis 20 Kohlenstoffatomen und einem Alkanol mit 3 bis 18 Kohlenstoffatomen,
Esterresten aus einem Diol, welches lineare, cyclische oder verzweigte, aliphatische oder aromatische Kohlenwasserstoffreste mit 2 bis 30 Kohlenstoffatomen beinhaltet, und einer Carbonsäure, die 1 bis 21 Kohlenstoffatome trägt,
Polyetherresten, die ggf. weitere Heteroatome wie N enthalten, und die Heteroatome ggf. Reste aus der Gruppe linearer, cyclischer oder verzweigter, aliphatischer oder aromatischer Kohlenwasserstoffreste mit 1 bis zu 20 Kohlenstoffatomen aufweisen, Polyethergruppen und Amidgruppen tragende Resten der Formel (8a)
-(CH₂)ₑ-CON(R5)-CH(R4)CH₂-[O-CH(R4)CH₂]_{f}-O-[GO]_{g}-[CH₂CH(R4)O]ₕ-(R5)NOC-(CH₂)ᵢ- (8a)
mit
R4 unabhängig voneinander H, -CH₃ oder -C₂H₅,
R5 gleich R4
e und i unabhängig voneinander 0 bis 20,
f und h unabhängig voneinander Werte > 1,
g 0 oder 1
G ein gegebenenfalls verzweigter Kohlenwasserstoffrest mit 2 bis 10 C-Atomen,
wobei das Gesamtmolgewicht des Restes der Formel (8a) von 100 bis 10.000 g/mol, beträgt,
Polyethergruppen und Estergruppen enthaltenden sogenannten Polyether-Ester-Resten der Formel (8b)
-(CH₂)ₑ-CO[O-CH₂-CH(R4)]_{f}-O-[G-O]_{g}-[-CH₂-CH(R4)-O]ₕ-OC-(CH₂)ᵢ- (8b)
wobei Definitionen der Abkürzungen und Indices denen der Formel (8a) entsprechen, wobei die Polyoxyalkylenreste ein Molgewicht von 100 bis 5000 g/mol aufweisen.

3. Copolymere nach Anspruch 1 oder 2, **dadurch gekennzeichnet, dass** zumindest ein Baustein der Formel C' ein Baustein der Formel (5), wobei Q2 ein organischer Rest, ausgewählt aus Kohlenwasserstoffresten mit 2 bis 20 Kohlenstoffatomen, die optional mit Hydroxylgruppen substituiert sein können oder ein Baustein der Formel (9)
-[O-CH₂-CH(R5)]ₗ-O-[G1-O]ₘ-[-CH₂-CH(R5)-O]ₒ- (9)
mit R5 unabhängig voneinander H, -CH₃ oder -C₂H₅, O und 1 unabhängig voneinander Werte größer oder gleich 0, m mindestens 1 und G1 einem Kohlenwasserstoffrest mit 2 bis 10 C-Atomen, wobei das Gesamtmolgewicht der Einheit der Formel (9) von 60 bis 10.000 g/mol beträgt, ist.

4. Copolymere nach zumindest einem der Ansprüche 1 bis 3, **dadurch gekennzeichnet, dass** sie als Bausteine der Formel C' ausschließlich Bausteine der Formel (4) aufweisen.

5. Verfahren zur Herstellung von Copolymeren, **dadurch gekennzeichnet, dass** Komponenten A, B und C umgesetzt werden, wobei als Komponente A Verbindungen der Formel (10) eingesetzt werden, 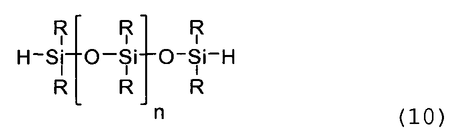 und n und R die in Anspruch 1 angegebene Bedeutung haben,
wobei als Komponente B Verbindungen der Formel (11) eingesetzt werden, 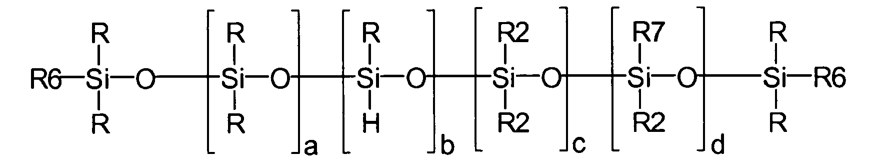 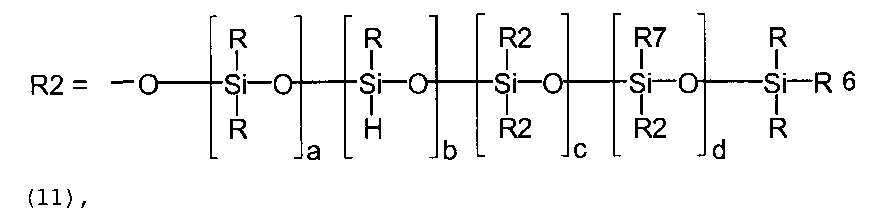 wobei
R6 unabhängig voneinander Wasserstoff oder R ist,
R7 unabhängig voneinander Wasserstoff, R oder ein mit Heteroatomen substituierter, funktioneller, organischer, gesättigter oder ungesättigter Rest ist,
R, a, b, c und d die in Anspruch 1 angegebene Bedeutung haben, mit der Maßgabe, dass wenn b = 0 ist zumindest ein Rest R6 oder R7 = H ist und dass die mittlere Anzahl der T- und Q-Einheiten pro Molekül jeweils nicht größer als 20, die mittlere Anzahl der D-Einheiten pro Molekül nicht größer als 2000 und die mittlere Anzahl der D^{H}-Einheiten pro Molekül nicht größer als 100 ist,
und wobei als Komponente C Verbindungen der Formel (12) und/oder (13) eingesetzt werden,
CH₂=CH-Q1-CH=CH₂ (12)
H-O-Q2-O-H (13)
wobei Q1 und Q2 die in Anspruch 1 genannten Bedeutungen haben.

6. Verfahren nach Anspruch 5, **dadurch gekennzeichnet, dass** die Komponente A in molaren Anteilen von 20 bis < 70 %, B in molaren Anteilen von > 0 bis 20 % und C in molaren Anteilen von 30 bis < 80 % eingesetzt wird, wobei sich die molaren Anteile der Komponenten A, B und C zu 100 % ergänzen.

7. Verfahren nach Anspruch 5 oder 6, **dadurch gekennzeichnet, dass** als Komponente C ausschließlich Verbindungen der Formel (12) eingesetzt werden.

8. Verfahren nach Anspruch 5 oder 6, **dadurch gekennzeichnet, dass** als Komponente C Verbindungen der Formel (12) und Verbindungen der Formel (13) eingesetzt werden, wobei das molare Verhältnis der Verbindungen der Formel (12) zu Verbindungen der Formel (13) von 1 zu 0,5 bis 1 zu 3 beträgt.

9. Verfahren nach mindestens einem der Ansprüche 5 bis 8, **dadurch gekennzeichnet, dass** das Verfahren so durchgeführt wird, dass ein zumindest 95 %-iger Umsatz der SiH-Gruppen erzielt wird.

10. Verfahren nach mindestens einem der Ansprüche 5 bis 9, **dadurch gekennzeichnet, dass** bei der Umsetzung eine Hydrosilylierung unter Verwendung eines Edelmetallkatalysators, ausgewählt aus Platinkatalysatoren durchgeführt wird.

11. Verfahren nach mindestens einem der Ansprüche 5 bis 10, **dadurch gekennzeichnet, dass** bei der Umsetzung eine Hydrosilylierung unter Verwendung eines Edelmetallkatalysators, ausgewählt aus Platinkatalysatoren und eine dehydrogenative Kupplung unter Verwendung von mindestens einem Katalysator, der zumindest eines der Elemente B, Al, Ga enthält, durchgeführt wird.

12. Verfahren nach mindestens einem der Ansprüche 5 bis 11, **dadurch gekennzeichnet, dass** Copolymere gemäß zumindest einem der Ansprüche 1 bis 4 hergestellt werden.

13. Zusammensetzung enthaltend Copolymere gemäß einem der Ansprüche 1 bis 4 sowie eine oder mehrere Komponenten A und/oder B wie in Anspruch 5 beschrieben.

14. Verwendung von Copolymeren gemäß einem der Ansprüche 1 bis 4 oder von Zusammensetzungen gemäß Anspruch 13 als Additiv in Silikontrennbeschichtungen.

15. Silikontrennbeschichtung, die von 0,001 bis 5 Gew.-% an Copolymeren gemäß einem der Ansprüche 1 bis 4 oder eine Zusammensetzung gemäß Anspruch 13 aufweist.

## Claims

1. Copolymers of the formula (1) [A']_{a'}[B']_{b'}[C']_{c'}[D']_{d'}, (1) where
A' = structural unit of the formula (2) 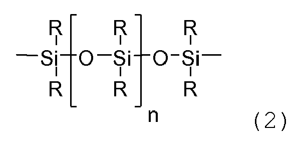 with n = 2 to 498,
B' = structural unit of the formula (3) 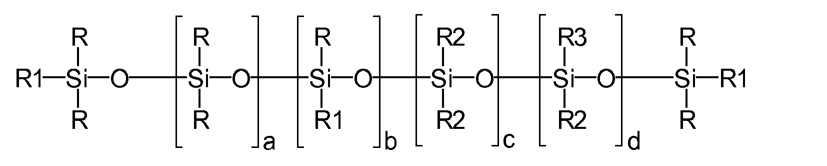 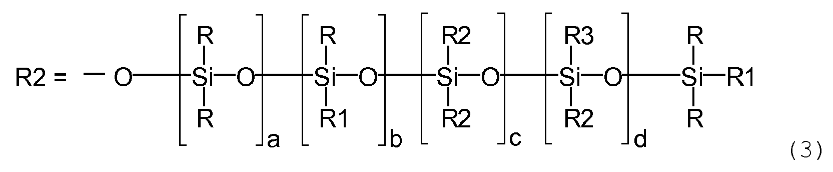
C' = identical or different structural units of the formulae (4) and/or (5)
-CH₂-CH₂-Q1-CH₂-CH₂- (4)
-O-Q2-O- (5)
D' = identical or different structural units of the formulae (6) and/or (7)
-CH₂-CH₂-Q1-CH=CH₂ (6)
-O-Q2-OH (7)
in which
a independently at each occurrence is 0 to 500,
b independently at each occurrence is 0 to 60,
c independently at each occurrence is 0 to 10,
d independently at each occurrence is 0 to 10, with the proviso that c + d is greater than/equal to 1,
R independently at each occurrence is a radical from the group of linear, cyclic or branched, aliphatic or aromatic, saturated or unsaturated hydrocarbon radicals having from 1 up to 20 C atoms,
R1 independently at each occurrence is a bond to a structural unit or R,
R3 independently at each occurrence is R1 or a heteroatom-substituted, functional, organic, saturated or unsaturated radical,
with the proviso that at least one R1 is a bond to a structural unit and that the average number of T and Q units per structural unit B' is in each case not greater than 20 and the average number of D units per structural unit B' is not greater than 2000,
a', b', c' and d' are indices which indicate the molar fractions of the structural units A' to D' in the compound of the formula (1), and a' is from 20% to 70%, preferably 30% to 60% and more preferably 35% to 50%, b' is greater than 0% to 20%, preferably 0.1% to 15%, more preferably 0.1-10%, c' = 30% to < 60%, preferably 30% to 50%, and d' is greater than/equal to 0%, preferably > 0% to 20%, more preferably from 1% to 15%,
Q1 = a bond or an organic radical and
Q2 = an organic radical.

2. Copolymers according to Claim 1, **characterized in that** at least one structural unit of the formula C' is a structural unit of the formula (4) where Q1 is a bond or an organic radical selected from linear, cyclic or branched, aliphatic or aromatic hydrocarbon radicals having 1 to 30 carbon atoms, ester radicals composed of a dicarboxylic acid having 2 to 20 carbon atoms and an alkanol having 3 to 18 carbon atoms,
ester radicals composed of a diol which comprises linear, cyclic or branched, aliphatic or aromatic hydrocarbon radicals having 2 to 30 carbon atoms and a carboxylic acid which carries 1 to 21 carbon atoms, polyether radicals which optionally contain further heteroatoms such as N, and the heteroatoms optionally have radicals from the group of linear, cyclic or branched, aliphatic or aromatic hydrocarbon radicals having from 1 up to 20 carbon atoms,
radicals carrying polyether groups and amide groups, of the formula (8a)
- (CH₂)ₑ-CON(R5)-CH(R4)CH₂-[O-CH(R4)CH₂]_{f}-O-[GO]_{g}-[CH₂CH(R4)O]ₕ-(R5)NOC-(CH₂)ᵢ- (8a)
where
R4 independently at each occurrence is H, -CH₃ or -C₂H₅,
R5 is the same as for R4,
e and i independently of one another are 0 to 20,
f and h independently of one another are values > 1,
g is 0 or 1,
G is an unbranched or branched hydrocarbon radical having 2 to 10 C atoms,
the total molar weight of the radical of the formula (8a) being from 100 to 10 000 g/mol,
so-called polyether-ester radicals, containing polyether groups and ester groups, of the formula (8b)
- (CH₂)ₑ-CO [O-CH₂-CH (R4) ]_{f} -O- [G-O]_{g}- [-CH₂-CH (R4) -O]ₕ-OC- (CH₂)ᵢ- (8b)
where definitions of the abbreviations and indices correspond to those for the formula (8a), the polyoxyalkylene radicals having a molar weight of 100 to 5000 g/mol.

3. Copolymers according to Claim 1 or 2, **characterized in that** at least one structural unit of the formula C' is a structural unit of the formula (5), where Q2 is an organic radical selected from hydrocarbon radicals having 2 to 20 carbon atoms, which may optionally be substituted by hydroxyl groups, or is a structural unit of the formula (9)
- [O-CH₂-CH (R5) ]₁-O-[G1-O]ₘ- [ -CH₂-CH (R5) -O]ₒ- (9)
where R5 independently at each occurrence is H, -CH₃ or -C₂H₅, o and 1 independently of one another are values greater than or equal to 0, m is at least 1 and G1 is a hydrocarbon radical having 2 to 10 C atoms, the total molar weight of the unit of the formula (9) being from 60 to 10 000 g/mol.

4. Copolymers according to at least one of Claims 1 to 3, **characterized in that** they have exclusively structural units of the formula (4) as structural units of the formula C'.

5. Process for preparing copolymers, **characterized in that** components A, B and C are reacted, where use is made as component A of compounds of the formula (10) 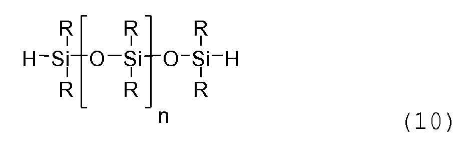 and n and R have the definition specified in Claim 1, where use is made as component B of compounds of the formula (11) 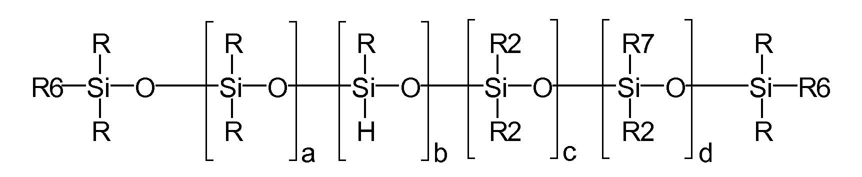 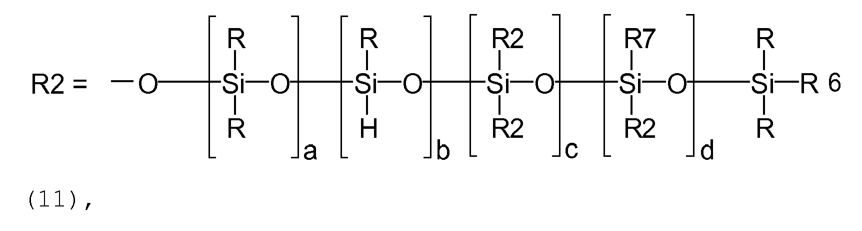 where
R6 independently at each occurrence is hydrogen or R,
R7 independently at each occurrence is hydrogen, R or a heteroatom-substituted, functional, organic, saturated or unsaturated radical,
R, a, b, c and d have the definition specified in Claim 1,
with the proviso that if b = 0 then at least one radical R6 or R7 = H and that the average number of T and Q units per molecule is in each case not greater than 20, the average number of D units per molecule is not greater than 2000 and the average number of D^{H} units per molecule is not greater than 100,
and where use is made as component C of compounds of the formula (12) and/or (13)
CH₂=CH-Q1-CH=CH₂ (12)
H-O-Q2-O-H (13)
where Q1 and Q2 have the definitions stated in Claim 1.

6. Process according to Claim 5, **characterized in that** component A is used in molar fractions of 20% to < 70%, B in molar fractions of > 0 to 20% and C in molar fractions of 30% to < 80%, the molar fractions of components A, B and C adding up to 100%.

7. Process according to Claim 5 or 6, **characterized in that** exclusively compounds of the formula (12) are used as component C.

8. Process according to Claim 5 or 6, **characterized in that** compounds of the formula (12) and compounds of the formula (13) are used as component C, the molar ratio of the compounds of the formula (12) to compounds of the formula (13) being from 1:0.5 to 1:3.

9. Process according to at least one of Claims 5 to 8, **characterized in that** the process is carried out such that an at least 95% conversion of the SiH groups is achieved.

10. Process according to at least one of Claims 5 to 9, **characterized in that** in the course of the reaction a hydrosilylation is carried out using a noble metal catalyst selected from platinum catalysts.

11. Process according to at least one of Claims 5 to 10, **characterized in that** in the course of the reaction a hydrosilylation is carried out using a noble metal catalyst selected from platinum catalysts, and a dehydrogenative coupling is carried out using at least one catalyst which comprises at least one of the elements B, Al and Ga.

12. Process according to at least one of Claims 5 to 11, **characterized in that** copolymers according to at least one of Claims 1 to 4 are prepared.

13. Composition comprising copolymers according to any of Claims 1 to 4 and also one or more components A and/or B as described in Claim 5.

14. Use of copolymers according to any of Claims 1 to 4 or of compositions according to Claim 13 as additives in silicone release coatings.

15. Silicone release coating having from 0.001% to 5% by weight of copolymers according to any of Claims 1 to 4 or a composition according to Claim 13.

## Revendications

1. Copolymères de formule (1)
[A']_{a'}[B']_{b'}[C']_{c'}[D']_{d'}, (1)
où
A' = un élément de formule (2) 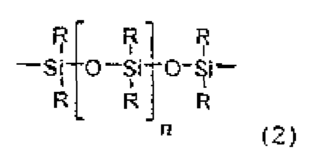 avec n = 2 à 498,
B' = un élément de formule (3) 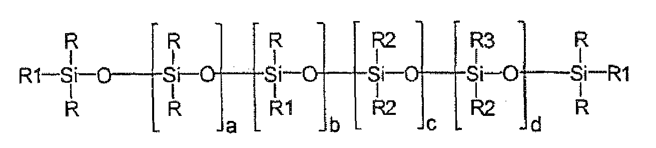 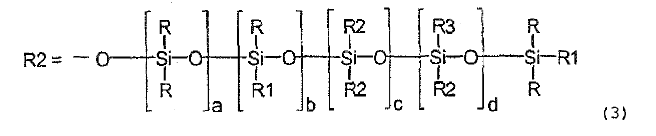
C' représente des éléments identiques ou différents des formules (4) et/ou (5)
-CH₂-CH₂-Q1-CH₂-CH₂- (4)
-O-Q2-O- (5)
D' représente des éléments identiques ou différents des formules (6) et/ou (7)
-CH₂-CH₂-Q1-CH=CH₂ (6)
-O-Q2-OH (7)
où
a vaut, indépendamment l'un de l'autre, 0 à 500,
b vaut, indépendamment l'un de l'autre, 0 à 60,
c vaut, indépendamment l'un de l'autre, 0 à 10,
d vaut, indépendamment l'un de l'autre, 0 à 10, à condition que c + d soit supérieur ou égal à 1,
R représente, indépendamment l'un de l'autre, un radical du groupe des radicaux hydrocarbonés linéaires, cycliques ou ramifiés, aliphatiques ou aromatiques, saturés ou insaturés comprenant 1 à 20 atomes de carbone,
R1 représente, indépendamment l'un de l'autre, une liaison avec un élément ou R,
R3 représente, indépendamment l'un de l'autre, R1 ou un radical fonctionnel, organique, saturé ou insaturé, substitué par des hétéroatomes,
à condition qu'au moins un R1 représente une liaison avec un élément et en ce que le nombre moyen des unités T et Q par élément B' n'est à chaque fois par supérieur à 20, le nombre moyen des unités D par élément B' n'est pas supérieur à 2000,
a', b', c' et d' sont des indices qui représentent les proportions molaires des éléments A' à D' dans le composé de formule (1) et a' vaut 20 à 70%, de préférence 30 à 60% et de préférence 35 à 50%, b' vaut plus de 0 à 20%, de préférence 0,1 à 15%, de préférence 0,1-10%, c' = 30 à <60%, de préférence 30 à 50% et d' est supérieur ou égal à 0, de préférence > 0 à 20%, de préférence 1 à 15%,
Q1 = une liaison ou un radical organique et
Q2 = un radical organique.

2. Copolymères selon la revendication 1, **caractérisés en ce qu'**au moins un élément de formule C' est un élément de formule (4), où Q1 représente une liaison ou un radical organique, choisi parmi les radicaux hydrocarbonés linéaires, cycliques ou ramifiés, aliphatiques ou aromatiques comprenant 1 à 30 atomes de carbone, les radicaux ester d'un acide dicarboxylique comprenant 2 à 20 atomes de carbone et d'un alcanol comprenant 3 à 18 atomes de carbone,
les radicaux ester d'un diol, qui comporte des radicaux hydrocarbonés linéaires, cycliques ou ramifiés, aliphatiques ou aromatiques comprenant 2 à 30 atomes de carbone, et d'un acide carboxylique, qui comprend 1 à 21 atomes de carbone,
les radicaux polyéther, qui contiennent le cas échéant d'autres hétéroatomes tels que N, et les hétéroatomes présentent le cas échéant des radicaux du groupe des radicaux hydrocarbonés linéaires, cycliques ou ramifiés, aliphatiques ou aromatiques comprenant 1 à 20 atomes de carbone,
les radicaux de formule (8a) portant des groupes polyéther et amide
-(CH₂)ₑ-CON(R5)-CH(R4)CH₂-[O-CH(R4)CH₂]_{f}-O-[GO]_{g}-[CH₂CH(R4)O]ₕ-(R5)NOC-(CH₂)ᵢ- (8a)
où
R4 représente, indépendamment l'un de l'autre, H, -CH₃ ou -C₂H₅,
R5 représente R4,
e et i valent, indépendamment l'un de l'autre, 0 à 20,
f et h valent, indépendamment l'un de l'autre, des valeurs > 1,
g vaut 0 ou 1,
G représente un radical hydrocarboné le cas échéant ramifié comprenant 2 à 10 atomes de carbone,
où le poids molaire total du radical de formule (8a) vaut 100 à 10 000 g/ mole,
les radicaux désignés par polyétherester de formule (8b) contenant des groupes polyéther et ester
-(CH₂)ₑ-CO[O-CH₂-CH(R4)]_{f}-O-[G-O]_{g}-[-CH₂-CH(R4)-O]ₕ-OC-(CH₂)ᵢ- (8b)
où les définitions des abréviations et indices correspondent à celles de la formule (8a), où les radicaux polyoxyalkylène présentent un poids molaire de 100 à 5000 g/ mole.

3. Copolymères selon la revendication 1 ou 2, **caractérisés en ce qu'**au moins un élément de formule C' est un élément de formule (5), où Q2 représente un radical organique, choisi parmi les radicaux hydrocarbonés comprenant 2 à 20 atomes de carbone, qui peuvent éventuellement être substitués par des groupes hydroxyle ou un élément de formule (9)
-[O-CH₂-CH(R5)]₁-O-[G1-O]ₘ-[-CH₂-CH(R5)-O]ₒ- (9)
où R5 représente, indépendamment l'un de l'autre, H, -CH₃ ou -C₂H₅, o et 1 valent, indépendamment l'un de l'autre, des valeurs supérieures ou égales à 0, m vaut au moins 1 et G1 représente un radical hydrocarboné comprenant 2 à 10 atomes de carbone, où le poids molaire total de l'unité de formule (9) vaut 60 à 10 000 g/ mole.

4. Copolymères selon au moins l'une quelconque des revendications 1 à 3, **caractérisés en ce qu'**ils présentent, comme éléments de formule C', exclusivement des éléments de formule (4).

5. Procédé pour la préparation de copolymères, **caractérisé en ce que** des composants A, B et C sont transformés, où on utilise comme composant A des composés de formule (10), 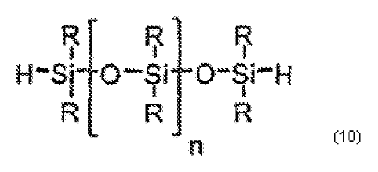 et n et R ont la signification indiquée dans la revendication 1,
où on utilise comme composant B des composés de formule (11), 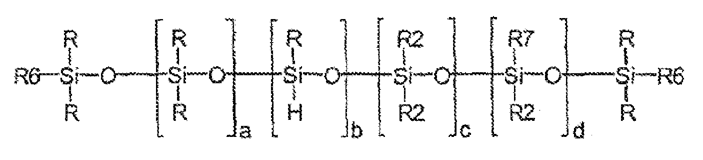 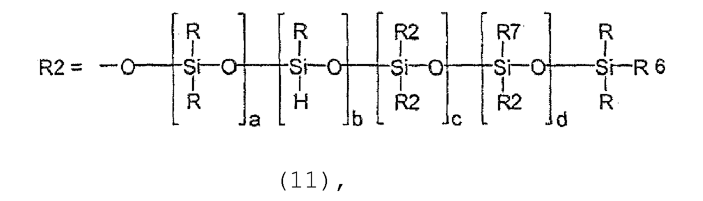 où
R6 représente, indépendamment l'un de l'autre hydrogène ou R,
R7 représente, indépendamment l'un de l'autre, hydrogène, R ou un radical fonctionnel, organique, saturé ou insaturé, substitué par des hétéroatomes,
R, a, b, c et d présentent la signification indiquée dans la revendication 1, à condition que lorsque b = 0, au moins un radical R6 ou R7 = H et **en ce que** le nombre moyen des unités T et Q par molécule n'est à chaque fois pas supérieur à 20, le nombre moyen des unités D par molécule n'est pas supérieur à 2000 et le nombre moyen des unités D^{H} par molécule n'est pas supérieur à 100,
et où on utilise comme composant C des composés de formule (12) et/ou (13),
CH₂ = CH-Q1-CH=CH₂ (12)
H-O-Q2-O-H (13)
où Q1 et Q2 ont les significations mentionnées dans la revendication 1.

6. Procédé selon la revendication 5, **caractérisé en ce que** le composant A est utilisé en des proportions molaires de 20 à < 70%, B est utilisé en des proportions molaires de > 0 à 20% et C est utilisé en des proportions molaires de 30 à < 80%, les proportions molaires des composants A, B et C se complétant à 100%.

7. Procédé selon la revendication 5 ou 6, **caractérisé en ce qu'**on utilise comme composant C exclusivement des composés de formule (12).

8. Procédé selon la revendication 5 ou 6, **caractérisé en ce qu'**on utilise comme composant C des composés de formule (12) et des composés de formule (13), où le rapport molaire des composés de formule (12) aux composés de formule (13) vaut 1:0,5 à 1:3.

9. Procédé selon au moins l'une quelconque des revendications 5 à 8, **caractérisé en ce que** le procédé est réalisé de manière telle qu'on atteint au moins une conversion à 95% des groupes SiH.

10. Procédé selon au moins l'une quelconque des revendications 5 à 9, **caractérisé en ce qu'**on réalise lors de la transformation une hydrosilylation avec utilisation d'un catalyseur de métal noble, choisi parmi les catalyseurs de platine.

11. Procédé selon au moins l'une quelconque des revendications 5 à 10, **caractérisé en ce qu'**on réalise lors de la transformation une hydrosilylation avec utilisation d'un catalyseur de métal noble, choisi parmi les catalyseurs de platine et un couplage avec déshydrogénation avec utilisation d'au moins un catalyseur, qui contient au moins un des éléments B, Al, Ga.

12. Procédé selon au moins l'une quelconque des revendications 5 à 11, **caractérisé en ce qu'**on prépare des copolymères selon au moins l'une quelconque des revendications 1 à 4.

13. Composition contenant des copolymères selon l'une quelconque des revendications 1 à 4 ainsi qu'un ou plusieurs composants A et/ou B tels que décrits dans la revendication 5.

14. Utilisation de copolymères selon l'une quelconque des revendications 1 à 4 ou de compositions selon la revendication 13 comme additif dans des revêtements de démoulage à base de silicone.

15. Revêtement de démoulage à base de silicone, qui présente 0,001 à 5% en poids de copolymères selon l'une quelconque des revendications 1 à 4 ou une composition selon la revendication 13.
